# EUROPÄISCHE PATENTSCHRIFT

(11) **EP 3 564 050 B1**
(45) Veröffentlichungstag und Bekanntmachung des Hinweises auf die Patenterteilung: **21.04.2021**
(21) Anmeldenummer: 19165880.6
(22) Anmeldetag: 05.04.2012
(51) Int. Cl.: B60D 1/06, B60D 1/30, B60D 1/58, B60D 1/62

(54) **ANHÄNGEKUPPLUNG MIT EINEM SENSOR**
TRAILER COUPLING WITH A SENSOR
ACCOUPLEMENT DE REMORQUE DOTÉ D'UN CAPTEUR

(30) Priorität: 12.04.2011 DE 202011005144 U; 29.07.2011 EP 11006270; 02.02.2012 DE 102012001923
(43) Veröffentlichungstag der Anmeldung: 06.11.2019
(62) Teilanmeldung aus: 12002479.9
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 332 750
- EP-A1- 2 415 620
- DE-A1-102008 040 866
- GB-A- 2 342 630
- US-A- 3 947 839

## Beschreibung

Die Erfindung betrifft eine Anhängekupplung für ein Kraftfahrzeug, insbesondere ein Personen-Kraftfahrzeug, zum Anhängen eines Anhängers an das Kraftfahrzeug, gemäß dem Oberbegriff des Anspruchs 1.

Eine Anhängekupplung der eingangs genannten Art ist z.B. in GB 2 342 630 A beschrieben.

Die Erfassung einer Winkelstellung des Anhängers relativ zum Zugfahrzeug bei einer Anhängekupplung gemäß DE 10 2010 049 614 kann für vielfältige Zwecke genutzt werden, beispielsweise um ein Rückwärtseinparken des Gespanns zu erleichtern, um Maßnahmen zur Erhöhung der Fahrstabilität des Gespanns herzustellen oder dergleichen.

Eine Anhängekupplung gemäß DE 10 2010 049 614 hat einen Mitnehmer in Gestalt eines Ringes. Im Bereich des Ringes steht jedoch keine Kontur oder Haltekontur für die Zugkupplung des Anhängers bereit. Es besteht die Gefahr, dass sich der Anhänger unerwünscht vom Zugfahrzeug löst.

Es ist die Aufgabe der vorliegenden Erfindung, eine Anhängekupplung mit einem System zur Winkelerfassung der Zugkupplung relativ zur Anhängekupplung bereitzustellen, bei dem eine sichere Befestigung der Zugkupplung des Anhängers am Kuppelkörper möglich ist.

Zur Lösung der Aufgabe ist eine Anhängekupplung gemäß der technischen Lehre des Anspruchs 1 vorgesehen.

Es können auch 2 oder mehrere Mitnehmer vorgesehen sein. Beispielsweise ist ein Mitnehmer oberhalb, ein anderer Mitnehmer unterhalb der Äquatorlinie des Kuppelkörpers angeordnet.

Ein Grundgedanke ist es dabei, dass die Anhängekupplung im Bereich ihres größten Umfanges, bei einer Normkugelkupplung beispielsweise 50 mm, nicht durch den Mitnehmer geschwächt ist. Somit kann ein so genannter Abhebetest, bei dem die zu Kugelkupplung von dem Kuppelkörper mit einer vorbestimmten Kraft abgezogen wird, was beispielsweise beim Fahrbetrieb des Gespanns aus Zugfahrzeug und Anhänger beim Überfahren von Bodenwellen auftreten kann. In der Norm ECE-R 55 ist diese Kraft beispielsweise unter Absatz 3.2.3 definiert. Gerade dort ist also der Kuppelkörper, insbesondere die Kupplungskugel, nicht geschwächt, so dass die Zugkupplungsaufnahme im Bereich des maximalen Umfangs des Kuppelkörpers an diesem eingreifen kann. Dennoch ist es möglich, dass der Mitnehmer von der Zugkupplung mitgenommen wird, so dass die Drehwinkelauffassung möglich ist.

Ein normgerechtes Verhalten bzw. eine normgerechte Belastbarkeit der Anhängekupplung ist bereits dann erzielt, wenn eine horizontale Ausrichtung von Anhängekupplung und Anhänger gegeben ist, d.h. dass der Mitnehmer oberhalb oder unterhalb der Äquatorialebene des Kuppelkörpers angeordnet ist. Die Äquatoriallinie ist dabei diejenige Ebene, die bei horizontal stehenden Fahrzeug oder Kuppelkörper horizontal verläuft.

Bevorzugt ist es jedoch, dass auch bei einer Schrägstellung des Anhängers relativ zum Zugfahrzeug noch ein maximaler Umfang des Kuppelkörpers zur Verfügung steht, an dem die Kupplung des Anhängers angreifen kann. es ist bevorzugt, dass der Äquatorialbereich, außerhalb dessen der Mitnehmer angeordnet ist, derart breit ist (man könnte auch sagen hoch ist), dass beispielsweise bei einer Schrägstellung der Zugkupplung zum Kuppelkörper bzw. auch zum Zugfahrzeug (je nachdem, was man betrachtet) um 10-15°, vorzugsweise 15-20° oder auch 10-25° Grad die Zugkupplungsaufnahme immer noch im Bereich eines maximalen Außenumfangs des Kuppelkörpers an demselben angreift.

Besonders bevorzugt ist es, wenn der Mitnehmer oberhalb einer Ebene oder im Bereich einer Ebene angeordnet ist, die etwa mittig zwischen der Oberseite des Kuppelkörpers und der Äquatorialebene verläuft.

Bevorzugt ist es auch, wenn eine Oberseite des Kuppelkörpers massiv ist, jedenfalls nicht durch den Mitnehmer geschwächt ist, so dass der Kuppelkörper einen seiner Oberseite eine obere Stützfläche aufweist.

Die Anhängekupplung weist einen an dem Kuppelkörper drehbar und/oder verschieblich gelagerten Mitnehmer auf, der von der Zugkupplungsaufnahme mitnehmbar und relativ zu dem Kuppelkörper verdrehbar bzw. verschiebbar ist.

Bei dem mindestens einen am Kuppelkörper angeordneten Mitnehmer sind die folgenden Maßnahmen zweckmäßig:
Der Mitnehmer ist vorzugsweise ringförmig, das heißt er umfasst mindestens einen Ring. Der Ring steht zweckmäßigerweise mit seiner radialen Außenseite vor die Oberfläche des Kuppelkörpers vor so dass er durch die Zugkupplung mitgenommen werden kann. Es versteht sich, dass auch mehrere Ringe möglich sind. Beispielsweise ist es denkbar, dass oberhalb und unterhalb einer Äquatoriallinie des Kuppelkörpers bzw. einem maximalen Außenumfang des Kuppelkörpers jeweils ein derartiger Ring angeordnet ist.

Es versteht sich, dass auch andere Formen von Mitnehmern möglich sind. Beispielsweise kann ein Mitnehmer, der beispielsweise einen Bestandteil einer Sensoranordnung zur Erfassung eines Kippwinkels zwischen Zugfahrzeug und Anhänger dient, ein am Kuppelkörper verschieblich gelagertes Mitnehmerteil umfassen.

Ferner ist es möglich, dass beispielsweise eine Rolle oder ein Rad oder mehrere Rollen oder mehrere Räder nebeneinander, beispielsweise über einen Außenumfang des Kuppelkörpers verteilt, drehbar am Kuppelkörper gelagert sind. Wenn sich die Zugkupplung dreht, nimmt sie den Mitnehmer mit, der als Rolle oder Rad ausgestaltet ist, der seinerseits wiederum beispielsweise als Sensorgeber wirkt. Auch bei diesen Ausgestaltungen von Mitnehmern ist es vorteilhaft, dass sie jeweils nicht am Äquator beispielsweise einer Kupplungskugel oder einem Bereiches des größten Außenumfangs des Kuppelkörpers angeordnet sind, sondern oberhalb oder unterhalb des Äquators oder eines Bereiches des größten Außenumfangs.

Eine weitere vorteilhafte Maßnahme kann vorsehen, dass die Oberseite des Kuppelkörpers, zum Beispiel der Kupplungskugel, zum Tragen der Zugkupplungsaufnahme bereit steht, d.h. dass dort an der Oberseite oder an oberen Stirnseite bzw. vorteilhaft einer Flachseite des Kuppelkörpers kein Mitnehmer angeordnet ist.

Der Mitnehmer ist vorteilhaft unterhalb einer oberen Flachseite des Kuppelkörpers angeordnet.

Der Mitnehmer kann beispielsweise ein einteiliger Ring sein oder einen einteiligen Ring umfassen. Es ist aber auch möglich, dass der Mitnehmer mehrteilig ist. Weiterhin ist es vorteilhaft, wenn der Mitnehmer als ein Ring ausgebildet ist, der mehrere Ringsegmente aufweist. Die Segmente des Mitnehmers, insbesondere die Ringsegmente, können beispielsweise durch einmal verschließbare Verbindungen miteinander verbunden sein, z.B. Tannenbaumschrägen, Clips oder dergleichen. Beispielsweise ist eine Verbindung der Segmente des Mitnehmers in der Art von Kabelbinder-Verbindungen möglich. Aber auch sonstige Fügemethoden, z.B. Vernieten, Schrauben, Kleben, miteinander Verclipsen oder Verrasten oder dergleichen sind bei Segmenten eines erfindungsgemäßen Mitnehmers ohne Weiteres möglich.

Ringsegmente eines Mitnehmers gemäß der Erfindung können beispielsweise miteinander verklammert werden. Auch ein Verschrauben oder Verhaken ist ohne weiteres möglich. Es ist auch möglich, dass bei einem mindestens zwei oder mehrere Radiallagen umfassenden Mitnehmer Radiallagen durch Rastverbindungen, Verklammern, Haken oder dergleichen miteinander verbunden sind.

Eine weitere Ausführungsform der Erfindung sieht vor, dass zwei oder mehr Ringsegmente durch eine Klammer zusammengehalten werden, wobei die Klammer beispielsweise in Umfangsrichtung einen Schlitz oder eine Ausnehmung umfasst. Der Ring bzw. die Klammer erstreckt sich über einen größten Umfang eines durch die Ringsegmente gebildeten Mitnehmer-Rings weg. An mindestens einem Ringsegment ist zweckmäßigerweise eine Aufnahme vorhanden, in die die Klammer eingreifen kann.

Wie aus dem obigen deutlich wird, kann der Mitnehmer zwar einstückig sein, gegebenenfalls beispielsweise auch Aufnahmen zum Aufnehmen eines Sensors, eines Gebers für den Sensor oder dergleichen, umfassen. Weiterhin ist es möglich, dass der Mitnehmer in Umfangsrichtung mehrteilig ist, zumindest in einer Radialebene, d.h. dass er in einer Radialebene oder insgesamt beispielsweise 2 oder mehr Ringsegmente umfasst.

Der Mitnehmer kann aber auch radial gesehen, d.h. von innen nach außen bzw. umgekehrt, mehrere Schichten oder Komponenten umfassen. Beispielsweise kann eine innere Ebene oder Schicht als Gleitschicht oder Lagerschicht bzw. -ebene ausgestaltet sein, während eine äußere Ebene oder Schicht als Mitnahmeschicht oder -ebene, mithin also als Mitnehmerteil, ausgestaltet ist. Die äußere Schicht oder Komponente oder Lage soll nämlich einen möglichst festen Halt der Zugkupplung am Mitnehmer, möglichst ohne Schlupf, ermöglichen. Die Reibung sollte also entsprechend hoch sein. Innen, im Kontaktbereich mit dem Kuppelkörper, ist jedoch eine geringe Reibung bevorzugt, so dass dort beispielsweise eine Gleitschicht angeordnet ist. Selbst verständlich ist es auch möglich, dass der Mitnehmer ein Rollen- oder Walzenlager umfasst, mit dem er drehbar am Kuppelkörper gelagert ist.

Ein Aufbau des Mitnehmers in Schichten oder in mehreren Lagen ermöglicht es, verschiedene Materialien mit jeweils optimalen Eigenschaften zu kombinieren. So kann beispielsweise eine in Kontakt mit dem Kuppelkörper befindliche Komponente des Mitnehmers vorteilhaft die vorgenannte gute Gleiteigenschaft aufweist.

Eine Schicht oder Komponente des Mitnehmers, die zum Halten oder Aufnehmen eines Sensors oder eines Gebers zum Betätigen des Sensors ausgestaltet ist, ist vorteilhaft relativ biegesteif. Diese Schicht oder Komponente des Mitnehmers kann mit Vorteil den Sensor oder Geber gut halten und/oder schützen.

Es ist auch möglich, dass der Mitnehmer mehrere Komponenten umfasst, von denen manche Ringsegmente bilden, die vor Ort, d.h. bei der Montage, am Kuppelkörper miteinander verbunden werden, d.h. dass die jeweiligen Ringsegmente relativ biegesteif sein können und so beispielsweise ohne Probleme auch in eine Führungsnut am Kuppelkörper eingesetzt werden können. Andere Komponenten des Mitnehmers, beispielsweise ein zahnriemenartiges Mitnehmerteil, das radial außen angeordnet ist, sind zweckmäßigerweise einstückig. Beispielsweise kann ein ringartiges Mitnehmerteil als Ganzes auf bereits am Kuppelkörper montierte Komponenten des Mitnehmers aufgebracht werden oder beispielsweise auch in diese bereits montierten Komponenten eingebracht werden.

Der erfindungsgemäße Mitnehmer weist zweckmäßigerweise einen radial ihnen bezüglich des Kuppelkörpers angeordneten Träger und ein radial außen bezüglich des Kuppelkörpers an dem Träger angeordnetes Mitnehmerteil, beispielsweise einen Mitnehmerring, wobei das Mitnehmerteil zur Drehmitnahme durch die Zugkupplungsaufnahme vorgesehen ist.

Der Träger kann beispielsweise mehrteilig sein, beispielsweise zweiteilig. Der Träger umfasst beispielsweise miteinander verbundene Ringsegmente. Die Verbindung des Trägers miteinander kann auch durch das Mitnehmerteil, insbesondere wenn es als Mitnehmerring ausgestaltet ist, bewirkt sein. Bevorzugt ist es jedoch, wenn die Ringsegmente des Trägers miteinander direkt verbunden sind, beispielsweise durch Rastvorsprünge, Haken oder dergleichen. Es versteht sich, dass die Ringsegmente auch miteinander verklebt oder verschweißt sein können. Das Mitnehmerteil selbst ist zweckmäßigerweise als ein auswechselbares Bauteil ausgestaltet, so dass es bei Verschleiß entfernt und am Träger ein unverschlissenes Mitnehmerteil befestigbar ist. Der Träger weist beispielsweise eine Aufnahme für das Mitnehmerteil auf die Aufnahme ist beispielsweise als eine Ringnut ausgestaltet.

Zwischen dem Mitnehmerteil und dem Träger ist zweckmäßigerweise eine Kompressionsschicht vorgesehen. Die Kompressionsschicht besteht oder enthält ein leicht komprimierbares Material, zum Beispiel Polyurethan. Beispielsweise ist die Kompressionsschicht am Boden der Aufnahme für das Mitnehmerteil vorgesehen.

Die Kompressionsschicht ist radial nachgiebig, so dass das Mitnehmerteil unter Komprimierung der Kompressionsschicht in Richtung des Trägers verformt war ist, also nachgibt. Bei dieser Konstruktion können beispielsweise der Träger und das Mitnehmerteil relativ hart und/oder biegesteif sein, also verschleißfest. Die Nachgiebigkeit ist quasi im Innern des Mitnehmers vorgesehen, zwischen dem Träger und dem Mitnehmerteil. Das Mitnehmerteil oder die Schicht des Mitnehmers, die in Kontakt mit der Zugkupplungsaufnahme tritt, besteht beispielsweise aus einem relativ abriebfesten Material, z.B. aus einer insbesondere 2mm starken PU Folie in 85 Shore A oder bis zu 95 Shore A mit großen Reißdehnung, zum Beispiel größer als 400-500, insbesondere größer als 600. Eine weitere Lage des Mitnehmerteils kann beispielsweise aus Sylomer bestehen oder ein solches Material umfassen.

Zweckmäßigerweise ist der Träger mehrteilig, insbesondere zweiteilig, und/oder weist eine Aufnahme für das Mitnehmerteil auf.

Das Mitnehmerteil ist vorteilhaft einstückig und derart flexibel, dass er auf oder in den bereits am Kuppelkörper montierten Träger auf- oder einbringbar ist. Das Mitnehmerteil kann auch mindestens 2 Ringsegmente umfassen, die miteinander und/oder mit dem Träger verbindbar, insbesondere verschraubbar und/oder verklebbar, sind.

Zwischen dem Mitnehmerteil und dem Träger ist vorteilhaft eine Kompressionsschicht vorgesehen, insbesondere aus Polyurethan, die bei Druckbeaufschlagung des Mitnehmerteils insbesondere durch die Zugkupplungsaufnahme in Richtung des Trägers nachgibt und ein Verformen des Mitnehmerteils in Richtung des Trägers ermöglicht.

So ist beispielsweise ein Träger des Mitnehmers aus 2 oder mehreren Ringsegmenten gebildet, die miteinander verbunden und am Kuppelkörper montiert werden. Auf diesen Träger können dann einer oder mehrere weitere Ringe, die jedoch dehnbar sind, aufgebracht werden.

Vorteilhaft ist es beispielsweise, dass die äußere Komponente, d.h. beispielsweise ein Mitnehmerteil, das von der Zugkupplungsaufnahme beispielsweise formschlüssig oder reibschlüssig mitgenommen werden soll, dehnbar oder aufweitbar ist, so dass er an dem bereits am Kuppelkörper befindlichen Träger montierbar ist, beispielsweise in eine Nut dieses Trägers einsetzbar ist oder am Außenumfang des Trägers befestigbar ist, zum Beispiel anklebbar.

Es versteht sich, dass an bereits am Kuppelkörper montierten oder montierbaren Ringsegmenten oder an mindestens einer anderen, auch einstückigen und ringförmigen Komponente des Mitnehmers eines oder mehrerer Mitnehmerteile, die von der zu Kugelkupplung mitgenommen werden können, angeordnet sein können. So können beispielsweise elastische Mitnahmevorsprünge, z.B. Dorne, Zähne oder dergleichen, vor einen an sich relativ biegesteifen Träger vorstehen. Der Träger kann beispielsweise eines oder mehrere Ringsegmente umfassen.

Der einstückige oder mehrere Ringsegmente umfassende Träger kann beispielsweise an sich ringförmig sein, während die von der Zugkugelkupplung mitzunehmende bzw. mit der Zugkugelkupplung in Kontakt kommende Komponente, das eigentliche Mitnehmerteil, zwar in einer Ausführungsform der Erfindung als ein einstückiger oder mehrere Ringsegmente umfassender Mitnehmerring ausgestaltet sein kann, in einer anderen Ausführungsformen der Erfindung jedoch auch einzelne Mitnehmerelemente umfassen kann, die an einem drehbar am Kupplungskörper gelagerten Träger angeordnet sind.

Eine Mehrteiligkeit des Mitnehmers ist insbesondere dann zweckmäßig, wenn dieser an sich oder Komponenten des Mitnehmers relativ biegesteif sind. Aber auch dann, wenn der Mitnehmer und/oder dessen Segmente eine gewisse Elastizität aufweisen, ist das vorgenannte Verbinden von Segmenten ohne Weiteres zweckmäßig.

Bevorzugt ist der Mitnehmer elastisch verformbar. Beispielsweise ist der Mitnehmer durch die Zugkupplung selbst, insbesondere die Kupplungsaufnahme, eine Schließbacke oder dergleichen der Zugkupplung verformbar. Weiterhin ist es vorteilhaft, wenn der Mitnehmer im Sinne eines Aufweitens für die Montage an dem Kuppelkörper elastisch verformbar ist. Somit kann der Mitnehmer quasi über den Kuppelkörper übergestreift werden.

Es ist auch möglich, dass der Mitnehmer oder ein Mitnehmerteil, der zum Kontakt mit der Zugkupplung vorgesehen ist, wenn er durch die Zugkupplung verformt ist, eine andere Geometrie aufweist, als im unverformten Zustand. Beispielsweise ist das Mitnehmerteil oder der Mitnehmer ohne Kraftbeaufschlagung im Wesentlichen kreisringförmig, nimmt jedoch eine ovale oder elliptische Form an, wenn er durch die Zugkupplung, insbesondere deren Schließbacke beaufschlagt ist. Durch die Elastizität ist es beispielsweise möglich, dass der Mitnehmer formschlüssig an der Zugkupplung, insbesondere der Kupplungsaufnahme formschlüssig anliegt. Aber auch ein kraftschlüssiges oder reibschlüssiges Anliegen ist ohne Weiteres möglich.

Der Mitnehmer ist zweckmäßigerweise riemenartig oder umfasst einen Riemen.

Bevorzugt hat der Mitnehmer nach radial außen vorstehende Mitnahmevorsprünge und/oder eine Reibschlussfläche.

Der Mitnehmer ist z.B. in der Art eines Zahnriemens ausgestaltet.

Die Mitnahmevorsprünge sind zweckmäßigerweise flexibel oder elastisch oder beides. Somit können die Mitnahmevorsprünge durch die Zugkupplung, insbesondere die Zugkupplungsaufnahme, verformt werden, so dass sie flexibel und elastisch an deren Innenoberfläche anliegen. Die Mitnahmevorsprünge, auch in nicht elastischer Ausführung, und/oder ebenfalls vorteilhafte Schlitze am Mitnahmekörper haben auch den Vorteil, dass Verschmutzungen, z.B. Sand, Dreck oder sonstige Materialien, zwischen die Mitnahmevorsprünge gelangen können und so keine direkte Kraft auf im Innern des Mitnehmers befindliche Komponenten, z.B. die nachfolgend noch beschriebenen Magnete, ausüben können. Beispielsweise ist der Mitnehmer geschlitzt, so dass dadurch Mitnahmevorsprünge gebildet sind.

Der Mitnehmer und/oder ein Lagerbereich des Kuppelkörpers zum Lagern des Mitnehmers sind zweckmäßigerweise mit einer Gleitbeschichtung oder einer Gleitlage versehen. Dadurch ist das Drehen des Mitnehmers an dem Kuppelkörper erleichtert.

Bevorzugt ist eine Lageraufnahme für den Mitnehmer vorhanden, so dass dieser an dem Kuppelkörper geführt und gelagert ist. Bei der Lageraufnahme handelt es sich vorzugsweise um eine Vertiefung, beispielsweise um eine Führungsnut. Besonders bevorzugt ist eine Ringnut.

Die Lageraufnahme und/oder der Mitnehmer sind vorzugsweise direkt neben dem Äquatorialbereich oder dem maximalen Außenumfang des Kuppelkörpers angeordnet. Beispielsweise ist eine untere oder obere Kante der Lageraufnahme und/oder des Mitnehmers direkt an den Äquatorialbereich oder den maximalen Außenumfang des Kuppelkörpers angrenzend.

Die Sensoraufnahme und die Lageraufnahme gehen zweckmäßigerweise ineinander gegenüber und/oder es ist vorgesehen, dass die Lageraufnahme die Sensoraufnahme schneidet. Somit wird der Mitnehmer direkt an der Sensoraufnahme vorbeigeführt, so dass er den Sensor in der Sensoraufnahme beeinflussen kann. Es ist aber auch denkbar, dass die Lageraufnahme neben der Sensoraufnahme angeordnet ist und der Mitnehmer dennoch den Sensor beeinflusst, so dass dieser eine Relativposition des Mitnehmers zum Kuppelkörper und somit eine Winkellage der Zugkupplung zur Anhängekupplung, ermitteln kann.

Bevorzugt weist der Mitnehmer außenseitig eine ballige Kontur auf. Die Außenkontur ist dabei diejenige Kontur, die in Kontakt mit der Zugkupplungsaufnahme gelangt. Wenn also beispielsweise ein Bremspad einer Schlingerkupplung an der erfindungsgemäßen Anhängekupplung montiert wird, hat dieser an dem Mitnehmer keine oder jedenfalls nur eine geringe Angriffsfläche, so dass er vertikal über den insbesondere ringförmigen Mitnehmer rutschen kann, ohne ihn abzuscheren.

Es versteht sich, dass zweckmäßigerweise der Mitnehmer mit seiner Außenkontur an die Außenkontur des Kuppelkörpers angepasst ist, auch wenn Mitnahmevorsprünge des Mitnehmers vor den Kuppelkörper vorstehen. Beispielsweise sind die Mitnahmevorsprünge gerundet oder haben einen Schrägverlauf derart, dass sie nahezu mit der Außenkontur des Kuppelkörpers fluchten, vor diese jedoch zur Drehmitnahme durch die Zugkupplungsaufnahme vorstehen.

Die Lageraufnahme ist zweckmäßigerweise an mindestens einem Bereich so tief, dass sie einen Abschnitt des Mitnehmers, der dort von der Lageraufnahme aufgenommen ist, vollständig aufnehmen kann. Somit steht dieser Abschnitt des Mitnehmers nicht vor der Lageraufnahme nach außen vor. Beispielsweise handelt es sich bei diesem Abschnitt um in Fahrtrichtung vordere oder hintere Abschnitt der Lageraufnahme, in die der Mitnehmer quasi vollständig von der Zugkupplung hinein verdrängt werden kann. Bezüglich der Sensoranordnung sind verschiedene Techniken möglich:
Der Mitnehmer umfasst vorteilhaft mindestens einen Sensor und/oder mindestens einen Geber zum Betätigen des mindestens einen Sensors, insbesondere eine Magnetanordnung mit mindestens einem Magneten und/oder einen optischen Geber, insbesondere eine Reflexionsmarkierung, und/oder ein magnetisiertes Kunststoffmaterial mit magnetischen Partikeln.

Gemäß einer Variante der Erfindung ist mindestens ein Sensor, zum Beispiel ein optischer Sensor, ein induktiver oder magnetischer Sensor oder dergleichen ortsfest am Kuppelkörper, beispielsweise in der Sensoraufnahme, angeordnet, während einer oder mehrere Geber an dem Mitnehmer angeordnet sind. Es ist gemäß einer anderen Variante der Erfindung auch möglich, dass beispielsweise ein Sensor am Mitnehmer angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Die Sensoranordnung weist vorteilhaft mindestens eine Lichtquelle mit einem zum Mitnehmer gerichteten Licht-Austrittsbereich zur Erzeugung von durch den Mitnehmer reflektierbarem Licht auf. Ein Licht-Erfassungsbereich des mindestens einen optischen Sensors ist zur Erfassung des reflektierten Lichts ausgerichtet. Die Sensoranordnung weist vorteilhaft Signalmittel zur Erzeugung eines eine Winkelstellung des Mitnehmers relativ zu dem Kuppelkörperträger anzeigenden Winkelsignals anhand eines Messsignals auf, das von dem mindestens einen optischen Sensor anhand von durch den Mitnehmer reflektiertem Licht erzeugbar ist.

Bevorzugt ist ein magnetisches Prinzip, d.h. der Sensor umfasst einen oder mehrere Sensorkomponenten, die magnetisch aktivierbar sind. Beispielsweise handelt es sich bei dem Sensor um einen magnetisch resistiven Sensor, insbesondere einen GMR- oder AMR-Sensor. Es versteht sich, dass die Erfindung nicht auf magnetische Sensoren beschränkt ist, d.h. dass beispielsweise auch optische Sensoren möglich sind, was später noch deutlich wird.

In Zusammenwirkung mit dem magnetischen Sensor und der magnetischen Sensoranordnung weist der Mitnehmer zweckmäßigerweise eine Magnetanordnung mit einem oder mehreren Magneten auf. Wenn mehrere Magnete vorhanden sind, sind ihre Pole zweckmäßigerweise in Umfangsrichtung des Mitnehmers zueinander beabstandet. Beispielsweise sind mehrere Magnete, insbesondere zwei oder mehr Magnete, in Umfangsrichtung hintereinander angeordnet, wobei die Polarität der Magnete zweckmäßigerweise gleich orientiert ist, d.h. dass ein Südpol des einen Magneten neben einem Nordpol des benachbarten Magneten angeordnet ist. Es versteht sich, dass jedoch auch eine umgekehrte Magnetisierung möglich ist, d.h. dass einander gegenüberliegende Südpole oder Nordpole vorgesehen sind. Weiterhin ist es denkbar, einen ringförmigen Magneten vorzusehen.

Der Mitnehmer weist zweckmäßigerweise mindestens eine Aufnahme, insbesondere eine Tasche, zur Aufnahme des mindestens einen Gebers zur Betätigung des mindestens Sensors, insbesondere zur Aufnahme eines Magneten, und/oder zur Aufnahme mindestens eines Sensors aufweist. Die mindestens eine Aufnahme ist vorteilhaft als eine Steckaufnahme zum Einstecken des mindestens einen Gebers oder Sensors ausgestaltet und/oder weist zweckmäßigerweise Rastmittel zum Verrasten des mindestens einen Gebers oder Sensors auf.

Der Mitnehmer umfasst also zweckmäßigerweise mindestens eine Aufnahme, vorteilhaft eine Anordnung von mindestens zwei Aufnahmen, die zum Aufnehmen mindestens eines Gebers, zum Beispiel eines Magneten, oder zur Aufnahme eines Sensors ausgestaltet sind. Diese mindestens eine Aufnahme ist zweckmäßigerweise an einem Innenumfang des Mitnehmers angeordnet. Beispielsweise ist die mindestens eine Aufnahme als Steckaufnahme oder Tasche ausgestaltet. Somit können der Geber oder der Sensor in eine jeweilige Steckaufnahme eingesteckt werden. Bevorzugt sind Rastmittel zum Verrasten des jeweiligen Gebers oder Sensors in der Aufnahme des Mitnehmers vorgesehen. Bevorzugt ist es, dass der Geber oder Sensor auswechselbar am Mitnehmer aufgenommen ist. An dieser Stelle sei bemerkt, dass selbstverständlich ein Geber oder Sensor auch fest mit dem Mitnehmer verbunden sein kann, beispielsweise verklebt oder in ein Material des Mitnehmers eingegossen oder eingebettet sein kann.

Des Weiteren kann der Mitnehmer auch aus einem magnetischen Kunststoffmaterial bestehen oder einem magnetisierbaren Kunststoffmaterial.

Es ist aber auch möglich, dass der Mitnehmer einen optischen Geber, z.B. eine Reflektionsmarkierung, einen Strichcode oder dergleichen aufweist, mit der der Sensor, in diesem Fall ein optischer Sensor, zusammenwirkt.

Bevorzugt besteht der Mitnehmer oder eine Komponente des Mitnehmers ganz oder im Wesentlichen aus einem thermoplastischen Polyurethan (PU), insbesondere mit vernetzter Struktur (TPUX). Vorteilhaft ist jedenfalls ein elastisches Kunststoffmaterial.

Die Magnetisierung des Mitnehmers kann beispielsweise anhand von magnetischem Material, z.B. Metallsplittern, seltenen Erden oderdergleichen, erfolgen.

Die Sensoranordnung umfasst zweckmäßigerweise mindestens eine Lichtquelle, deren Licht-Austrittsbereich zum Mitnehmer hin gerichtet ist, so dass durch diesen Licht reflektierbar ist. Ein Licht-Erfassungsbereich des mindestens einen optischen Sensors ist so ausgerichtet, dass er zur Erfassung des reflektierten Lichts geeignet ist.

Die Sensoranordnung weist - unabhängig davon, ob sie einen magnetischen, optischen oder auf einem sonstigen Messprinzip arbeitenden Sensor aufweist - zweckmäßigerweise Signalmittel zur Erzeugung eines eine Winkelstellung des Mitnehmers relativ zu dem Kuppelkörperträger anzeigenden Winkelsignals anhand eines Messsignals auf, das von dem mindestens einen beispielsweise optischen oder magentischen Sensor anhand durch den Mitnehmer erzeugten Signalen, z.B. reflektiertem Licht, Magnetfeldänderungen oder dergleichen, erzeugbar ist.

Die Signalmittel sind zweckmäßigerweise zur Berechnung von Koordinatendaten, beispielsweise Winkel-Koordinatendaten, anhand von Geschwindigkeitsdaten des mindestens einen Sensors ausgestaltet. Der Sensor misst also eine Winkeländerung des Mitnehmers relativ zum Kuppelkörper, um anhand dieses Geschwindigkeitssignals wiederum Winkel-Koordinatendaten zu ermitteln.

Weiterhin ist es vorteilhaft, wenn die Anhängekupplung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

Der mindestens eine Sensor - es können auch mehrere Sensoren vorgesehen sein - ist vorteilhaft in der Sensoraufnahme des Kuppelkörpers angeordnet. In der Sensoraufnahme des Kuppelkörpers könnte aber auch ein Geber zur Betätigung eines oder mehrerer in dem Mitnehmer angeordneten Sensoren angeordnet sein. Von der Sensoraufnahme führt beispielsweise ein Anschlusskanal und oder ein Montagekanal beispielsweise zu einer Auswerte Einrichtung zur Auswertung von Sensorsignalen des mindestens einen Sensors. Selbstverständlich könnte auch eine drahtlose Übertragung zwischen Sensor und Auswerteeinrichtung vorgesehen sein. Weiterhin ist es denkbar, dass der Sensor eine Auswerte Einrichtung aufweist und diese beispielsweise mit dem Bordnetz des Kraftfahrzeugs direkt, drahtlos, zum Beispiel über Funk, oder auch leitungsgebunden, kommuniziert.

Bevorzugt ist der Kuppelkörper etwa kugelig oder bildet eine Kugel. Diese Kugel kann oberseitig abgeflacht sein, wie es bei Normkugeln üblich ist. Beispielsweise bildet der Kuppelkörperträger einen Kupplungsarm oder weist einen solchen auf.

Weiterhin ist es vorteilhaft, wenn die Sensoraufnahme eine Freimachung aufweist, so dass der Sensor mit einem Abstand zu einer Innenwand der Sensoraufnahme in der Sensoraufnahme angeordnet werden kann oder angeordnet ist. Mithin hat der Sensor also einen Abstand zur Innenwand, was einen günstigen Feldverlauf von Magnetlinien ermöglicht. Die Freimachung oder ein Abstand zu einer Innenwand der Sensoraufnahme ist aber selbstverständlich entbehrlich, wenn beispielsweise das Material des Kuppelkörpers nicht magnetisch ist, z.B. aus Kunststoff, nicht magnetisierbarem Stahl, Aluminium oder dergleichen. Dabei ist zu bemerken, dass dieser Werkstoff nur im Bereich der Sensoraufnahme vorhanden sein muss, d.h. dass abseits der Sensoraufnahme auch magnetisierbare Werkstoffe an dem Kuppelkörper vorhanden sein können.

Der Kuppelkörper kann einstückig oder mehrteilig sein. Der Kuppelkörper weist beispielsweise ein Unterteil auf rund ein Oberteil, die aneinander montierbar, beispielsweise miteinander verschraubar, verschweißbar oder dergleichen sind. Wenn die beiden Teile (oder mehr Teile) noch nicht miteinander verbunden sind, ist es vorteilhaft möglich, einen oder mehrere Mitnehmer am Kuppelkörper zu montieren.

An dieser Stelle sei bemerkt, dass der Kuppelkörperträger abnehmbar, insbesondere steckbar, oder fest am Kraftfahrzeug montiert sein kann oder auch an einem Lager dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Nachfolgend wird ein Ausführungsbeispiel der Erfindung anhand der Zeichnung erläutert. Es zeigen:
- Figur 1: eine Querschnittsansicht einer Anhängekupplung gemäß der Erfindung, an die eine Zugkupplung angekuppelt ist,
- Figur 2: eine perspektivische Schrägansicht der Anhängekupplung von hinten oben,
- Figur 3: eine Querschnittsansicht der Anhängekupplung gemäß Figur 2, etwa entlang einer Schnittlinie A-A, die in die in
- Figur 4: von oben dargestellte Anhängekupplung eingezeichnet ist,
- Figur 5: eine Seitenansicht der Anhängekupplung gemäß der vorstehenden Figuren,
- Figur 6: einen Teilschnitt eines Kuppelkörpers der Anhängekupplung gemäß Figur 5 sowie eines Mitnehmers, etwa entlang einer Schnittlinie B-B in Figur 5,
- Figur 7: den Mitnehmer gemäß Figur 6 in unkomprimierter und komprimierter Stellung,
- Figur 8: eine perspektivische Schrägansicht des Mitnehmers gemäß Figuren 6, 7,
- Figur 9: eine weitere erfindungsgemäße Anhängekupplung, bei der ein Mitnehmer oberhalb einer Äquatoriallinie des Kuppelkörpers angeordnet ist, in perspektivischer Ansicht,
- Figur 10: die Anhängekupplung gemäß Figur 9 von vorn,
- Figur 11: einen Schnitt entlang einer Linie A-A in Figur 10,
- Figur 12: ein Detail B aus Figur 11,
- Figur 13: eine Variante der Anhängekupplung gemäß Figur 9,
- Figur 14: eine perspektivische Darstellung eines Ringsegments eines Mitnehmers für die Anhängekupplung gemäß Figur 1 oder Figur 9 mit einer in Umfangsrichtung wirksamen Hakenanordnung,
- Figur 15: eine Variante des Mitnehmers gemäß Figur 13, allerdings mit einer stirnseitig wirksamen Hakenanordnung,
- Figur 16: eine Variante des Mitnehmers gemäß Figur 13 mit einer Spreiz-Hakenanordnung,
- Figur 17: eine weitere Variante eines erfindungsgemäßen Mitnehmers, ebenfalls mit Rasthaken,
- Figur 18: eine Variante des Mitnehmers gemäß Figur 13, wobei 2 gleichartige Ringsegmente zur Bildung des gesamten Mitnehmers geeignet sind,
- Figur 19: ein weiteres Ausführungsbeispiel eines Mitnehmers, bei dem gleichartige Ringsegmente mittels Haken miteinander verhakbar sind,
- Figur 20: eine Variante des Mitnehmers gemäß Figur 13, wobei 2 Ringsegmente mit einem Scharnier, insbesondere einem Filmscharnier miteinander verbunden sind,
- Figur 21: einen Mitnehmer mit Steckaufnahmen zum Einstecken und Verrasten von Gebern,
- Figur 22: eine Variante des Mitnehmers gemäß Figur 20, ebenfalls mit Steckaufnahmen,
- Figur 23: eine schematische Draufsicht eines Mitnehmers, bei dem ein zahnriemenartigen Mitnehmerteil mit einem Träger des Mitnehmers verschraubt ist,

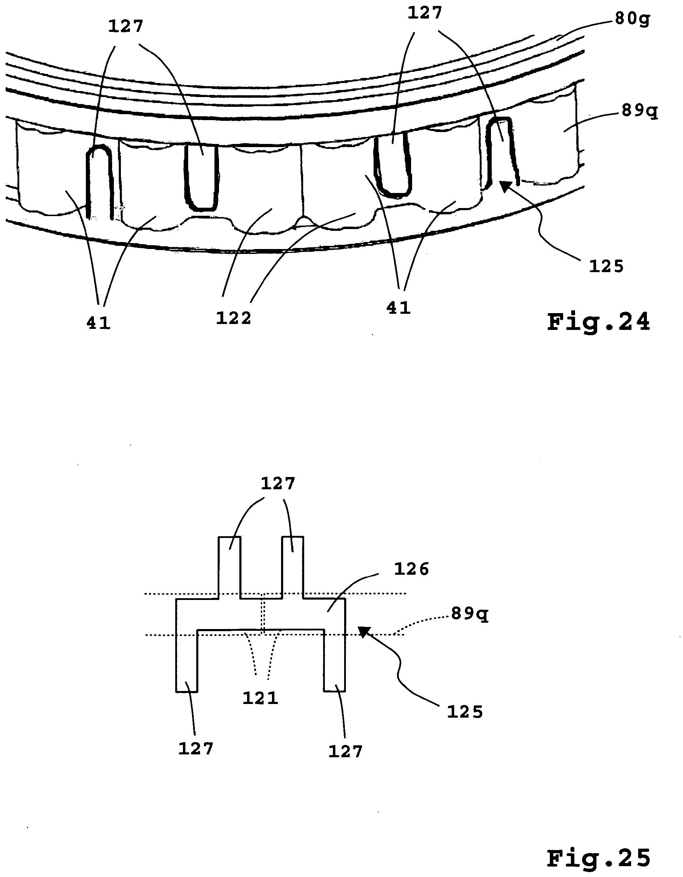

- Figur 24: einen Mitnehmer mit einem zahnriemenartigen Mitnehmerteil, dessen Längsenden mit einem in
- Figur 25: in Draufsicht dargestellten Schließglied miteinander verbunden sind.

Eine Anhängekupplung 10 ist an einem Kraftfahrzeug 12 befestigt, beispielsweise einem Querträger. An einem Kuppelkörperträger 13 der Anhängekupplung 10 sind hierfür beispielsweise Bohrungen 14 vorgesehen, wobei eine bewegliche Lagerung, insbesondere eine Dreh- und/oder Schiebelagerung, des Kuppelkörperträgers 13 bezüglich des Kraftfahrzeugs 12 auch möglich ist, z.B. anhand einer geeigneten Lagereinrichtung. Der Kuppelkörperträger 13 steht nach hinten vor einen Stoßfänger 11 des Kraftfahrzeuges 12 vor. Der Kuppelkörperträger 13 trägt an seinem freien Ende einen Kuppelkörper 15, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15 aufgesetzt werden.

Die Zugkupplung 16 ist an einem freien Ende einer Deichsel 19 des Anhängers 17 angeordnet und mittels eines Schwenkhebels 20 betätigbar. Wenn der an um eine Schwenkachse 24 schwenkbar gelagerte Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15. Somit liegt also eine Innenfläche 22 der Zugkupplungsaufnahme 18 an der Kugeloberfläche 23 an. Der Kuppelkörper 15 ist zweckmäßigerweise feststehend bezüglich des Kuppelkörperträgers 13, zumindest drehfest, so dass die Zugkupplungsaufnahme 18 an der Kugeloberfläche 23 in bekannter Weise außenseitig entlang gleitet. Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, vorliegend also der Zugkupplung 16. Diese ist dementsprechend eine Zugkugelkupplung.

Der Kuppelkörper 15 hat an seiner Oberseite eine Abflachung 25. Der Kuppelkörperträger 13 weist einen Halsabschnitt 26 auf, auf dem der Kuppelkörper 15 angeordnet ist. Der Halsabschnitt 26 befindet sich an einem freien Endbereich eines Armabschnitts 27 des Kuppelkörperträgers 13.

Der Armabschnitt 27, der Halsabschnitt 26 und der Kuppelkörper 15 sind zweckmäßigerweise einstückig, so dass insgesamt die Anhängekupplung 10 eine hohe Belastbarkeit aufweist. Es können typische Werkstoffe für Kugelstangen verwendet werden, wobei selbstverständlich auch höherwertige Materialien, z.B. C45, 42CrMo4 oder dergleichen, zwar möglich sind, jedoch nicht unbedingt notwendig. Ferner besteht die Möglichkeit, den Kuppelkörper 15 und den Kuppelkörperträger 13 auch mehrteilig auszuführen, beispielsweise als zwei voneinander an sich zunächst separate, jedoch fest miteinander verbundene Komponenten. Die jeweiligen Bestandteile der Anhängekupplung 10 können beispielsweise miteinander verschweißt, verklebt oder verschraubt sein, wobei die vorliegende einstückige Bauweise bevorzugt ist. Diese einstückige oder fest miteinander zusammengefügte Bauweise der Komponenten der Anhängekupplung 10 bzw. deren Kupplungsarm ist ohne Weiteres realisierbar, auch wenn die nachfolgend beschriebene Sensoranordnung 30 zum Einsatz kommt, mit der Winkelstellungen des Anhängers 17 relativ zur Anhängekupplung 10 und somit zum Kraftfahrzeug 12 ermittelbar sind.

Die Sensoranordnung 30 umfasst einen Sensor 31, beispielsweise einen magnetischen Sensor, der in einer Sensoraufnahme direkt am Kuppelkörper 15 angeordnet ist. Die Sensoraufnahme 32 und somit der Sensor 31 befinden sich in einem äquatorialen Bereich des Kuppelkörpers 15. Der Sensor 31 ist beispielsweise an einer Platine angeordnet, die weitere Komponenten enthalten kann, beispielsweise einen Filter zur Ausfilterung von unplausiblen Spitzenwerten, einen Verstärker zu Verstärkung eines Sensorsignals, das der Sensor 31 erzeugt, oder dergleichen. Selbstverständlich können diese Funktionen auch unmittelbar in den Sensor 31 integriert sein, insbesondere dann, wenn dieser als ein ASIC, ausgebildet ist.

Jedenfalls befindet sich der Sensor 31 vor Ort dort, wo die Winkelmessung tatsächlich stattfinden soll.

Am Kuppelkörper 15, ebenfalls im Bereich der Äquatoriallinie, befindet sich weiterhin ein Mitnehmer 33, der in einer Lageraufnahme 34 des Kuppelkörpers 15 drehbar gelagert ist. Der Mitnehmer 33 ist ringförmig, d.h. er ist als ein Ring ausgestaltet. In dem Mitnehmer 33 sind Magnete 35 aufgenommen, deren Magnetfeld den Sensor 31 erregt bzw. beaufschlagt. Ändert sich nunmehr die Winkelposition der Magnete 35 relativ zum Sensor 31, erzeugt dieser ein Winkelsignal, das die Winkelstellung des Mitnehmers 33 relativ zum Sensor 31 repräsentiert. Da der Sensor 31 bezüglich des Kuppelkörpers 15 ortsfest ist, signalisiert und identifiziert das Winkelsignal, das der Sensor 31 erzeugt, zugleich eine Winkelstellung des Mitnehmers 33 relativ zum Kuppelkörper 15.

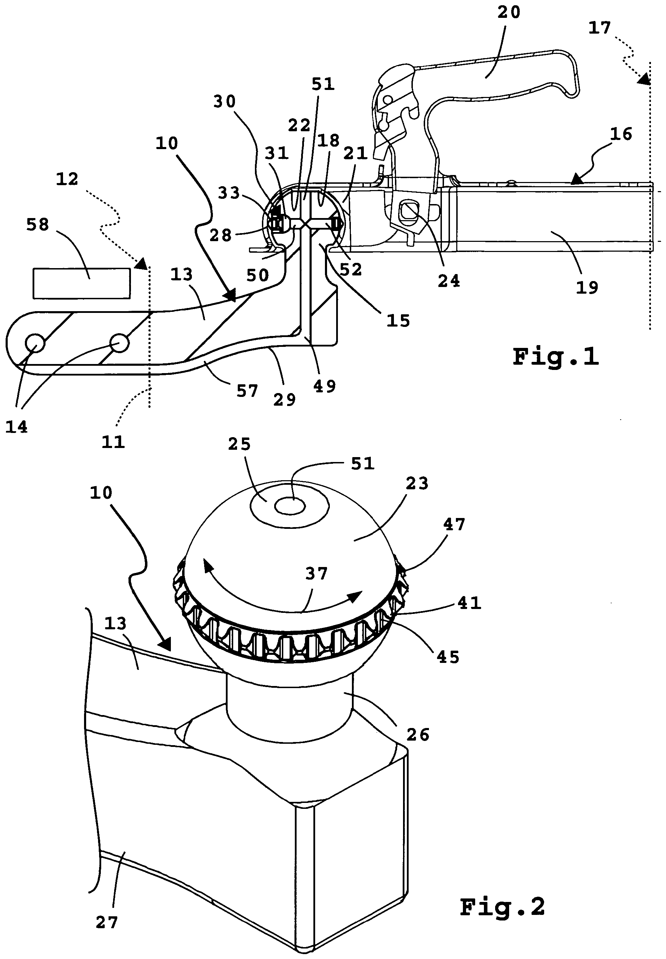

Die Magnete 35 sind beispielsweise nebeneinander, jedoch zweckmäßigerweise mit einem Abstand 36 zueinander im Mitnehmer 33 aufgenommen. Die Magnete 35 sind beispielsweise in Umfangsrichtung des Mitnehmers 33 nebeneinander angeordnet. Durch einen Pfeil 37 wird die Drehbarkeit des Mitnehmers 33 relativ zum Kuppelkörper 15 in Figur 2 angedeutet.

Der Mitnehmer 33 besteht beispielsweise aus Kunststoffmaterial, das eine gewisse Kompressibilität oder Elastizität aufweist, insbesondere aus Polyurethan. Vernetztes Polyurethan ist vorteilhaft. Zudem schützt der flexible Mitnehmer 33 die in ihm aufgenommenen Magnete 35. Beispielsweise sind Aufnahmetaschen 38 für die Magnete 35 vorhanden. Es ist aber auch möglich, dass die Magnete 35 direkt bei der Herstellung des Mitnehmers 33 mit dem Kunststoffmaterial umspritzt sind.

Weiterhin ist es möglich, einen an sich relativ harten, insbesondere magnetischen Mitnehmer vorzusehen, wobei dieser in der Regel zweiteilig oder mehrteilig sein wird, so dass man dessen einzelnen Komponenten an dem Kuppelkörper 15 montieren kann. Wenn der Mitnehmer 33 relativ starr ist, ist es zweckmäßig, ihn zumindest an seinem Außenumfang mit einer elastischen Beschichtung zu versehen, was nachfolgend noch deutlich wird:

Der Mitnehmer 33 wird nämlich von der Zugkupplung 16 mitgenommen, wenn diese an der Anhängekupplung 10 montiert ist, d.h. der Kuppelkörper 15 im Innenraum der Zugkupplungsaufnahme 18 angeordnet ist. Der Mitnahmeeffekt wird noch verbessert, indem der Haltebacken 21 Druck auf den Mitnehmer 33 ausübt, so dass dieser formschlüssig in der Zugkupplungsaufnahme 18 anliegt, jedoch bezüglich des Kuppelkörpers 15 drehbar ist (Pfeil 37) . Wenn also nunmehr der Anhänger 17 seine Drehposition oder Drehwinkelstellung relativ zum Kraftfahrzeug 12 bzw. zur Anhängekupplung 10 verändert, nimmt er den Mitnehmer 33 mit. Dadurch ändert eine Relativposition eines Magnetfeldes, das die Magnete 35 erzeugen, relativ zum Sensor 31. Der Sensor 31 kann somit die Winkelstellung des Mitnehmers 33 relativ zum Kuppelkörper 15, entsprechend also auch die Winkelstellung des Anhängers 17 relativ zum Kraftfahrzeug 12, ermitteln.

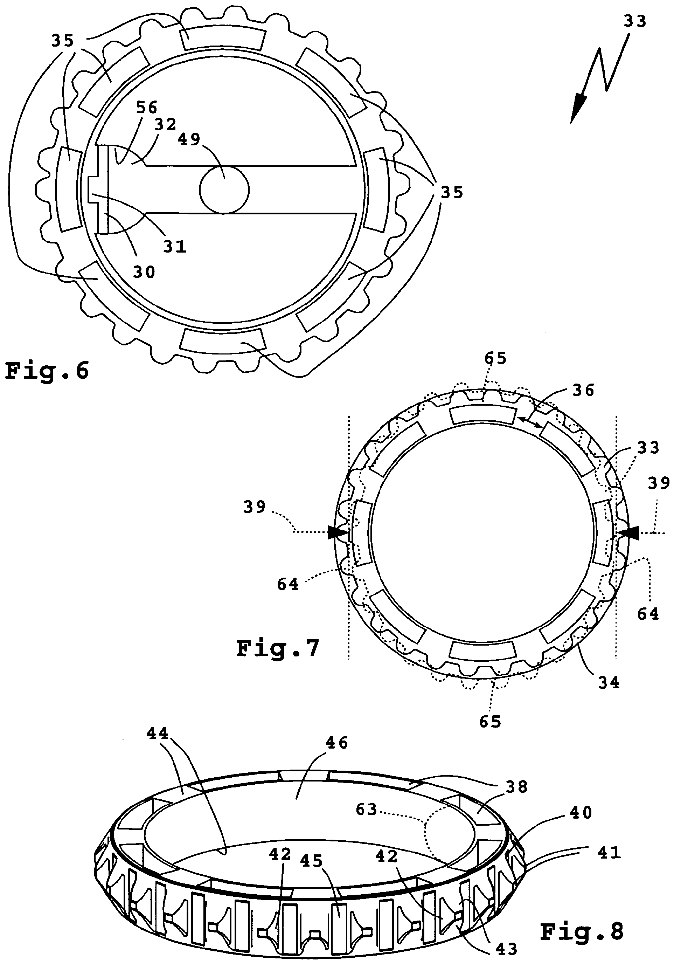

Die Drehmitnahme des Mitnehmers 33 durch die Zugkupplung 16 wird noch dadurch verbessert, dass dieser durch die Zugkupplung 16, insbesondere deren Haltebacken 21 komprimierbar ist. Dies ist durch Pfeile 39 in Figur 7 angedeutet. Wenn der Mitnehmer 33 ohne Kraftbeaufschlagung ist, hat er beispielsweise eine im Wesentlichen kreisrunde Gestalt, zumindest an seinem Innenumfang, der in Kontakt mit dem Kuppelkörper 15 tritt. Bei Beaufschlagung durch die Zugkupplung 16, insbesondere deren Haltebacken 21 und eine diesem gegenüberliegende Wand 28 der Zugkupplungsaufnahme 18, wird er etwas verformt, so dass er eine ovale oder elliptische Gestalt annimmt, die in gestrichelten Linien in Figur 7 eingezeichnet ist.

Mindestens ein Abschnitt 64 des Mitnehmers 33, der durch z.B. die den Haltebacken 21 druckbeaufschlagt ist, ist z.B. in der Lageraufnahme 34 des Kuppelkörpers 15 vollständig aufgenommen, so dass allenfalls Mitnahmevorsprünge 41 vor die Lageraufnahme 34 vorstehen. Durch die Beaufschlagung des Mitnehmers 33 im Bereich des mindestens einen Abschnitts 64 wird mindestens ein Abschnitt 65 des Mitnehmers 33 nach radial außen, d.h. aus der Lageraufnahme 34 des Kuppelkörpers 15 heraus gedrückt, so dass er noch weiter vor diese nach außen vorsteht als im unbelasteten Zustand.

An einem radialen Außenumfang 40 des Mitnehmers 33 befinden sich Mitnahmevorsprünge 41. Die Mitnahmevorsprünge 41 sind pyramidenförmig ausgestaltet. Jedenfalls ist es bei erfindungsgemäß vorgesehenen Mitnahmevorsprüngen vorteilhaft, wenn sie mindestens eine Schrägfläche aufweisen. Beispielsweise sind Schrägflächen 42 in Umfangsrichtung vorgesehen. Weiterhin sind Schrägflächen 43 vorgesehen, die schräg in Richtung der Stirnseiten 44 des Mitnehmers 33 verlaufen. Die Zugkupplungsaufnahme 18 liegt an den Mitnahmevorsprüngen 41 an, die zweckmäßigerweise zumindest in gewissem Maße komprimierbar bzw. elastisch verformbar sind, so dass sie flächig an der Zugkupplungsaufnahme 18 bzw. deren Innenfläche 22 anliegen. Dadurch wird der Halt bzw. die Drehmitnahme verbessert.

Weiterhin sind Schlitze 45 am Außenumfang 40 vorteilhaft. Durch die Schlitze 45 und/oder die Abstände zwischen den Mitnahmevorsprüngen 41 ist es möglich, dass Schmutz, beispielsweise Sand oder sonstige Partikel, in die Zwischenräume zwischen den Mitnahmevorsprüngen 41 und/oder die Schlitze 45 gelangen können, ohne dass durch die Druckbeanspruchung, die beim Schließen der Zugkupplung 16 auf den Mitnehmer 33 ausgeübt wird, eine zu hohe Druckbeanspruchung der Magnete 35 auftritt. Diese sind somit optimal geschützt.

Der Mitnehmer 33 gleitet mit seinem Innenumfang 46 sowie mit seinen Stirnseiten 44 in einer Führungsnut 47 am Kuppelkörper 15. Die Führungsnut 47 ist beispielsweise eine Ringnut. Die Anordnung ist vorteilhaft so getroffen, dass die Stirnseiten 44 ganz oder zumindest im Wesentlichen in der Führungsnut 47 aufgenommen sind, d.h. dass im Wesentlichen nur die Mitnahmevorsprünge 41 vor die Kugeloberfläche 23 des Kuppelkörpers 15 vorstehen. Weiterhin sind die Schrägflächen 43, die vorliegend einen im Wesentlichen geradlinigen Verlauf haben können, aber auch beispielsweise eine ballige Kontur ausprägen könnten, vorteilhaft insofern, als beispielsweise Bremspads oder sonstige Hindernisse, die bei der Zugkupplung 16 vorhanden sein können, über den Mitnehmer 33 hinweg gleiten können, ohne diesen zu beschädigen.

Allerdings ist festzuhalten, dass der Mitnehmer 33 leicht austauschbar ist. Wenn er nämlich verschlissen ist, kann er beispielsweise aus der Führungsnut 47 leicht entfernt und durch einen neuen, unverschlissenen Mitnehmer 33 ersetzt werden. Bevorzugt ist der Mitnehmer 33 nämlich insoweit dehnbar, dass er über den Kuppelkörper 15 hinweg gestreift werden kann, beispielsweise von der oberen Abflachung 25 her, bis er schließlich selbständig in die Führungsnut 47 "hineinschnappt".

Weiterhin ist die Führungsnut 47 derartig tief, dass es möglich ist, den Mitnehmer 33 elastisch im Sinne der Verformung, die in Figur 7 angedeutet ist, zu verformen. Mithin ist es also möglich, dass die Führungsnut 47 den Mitnehmer 33 im Wesentlichen an seinen Stirnseiten 44 führt. Der Innenumfang 46 des Mitnehmers 33 hingegen tritt nicht oder nur abschnittsweise mit dem Nutboden der Führungsnut 47 in Kontakt. Dies ist jedoch optional, d.h. nicht zwingend notwendig. Es ist nämlich auch möglich, dass der Innenumfang 46 im Wesentlichen flächig am Nutboden der Führungsnut 47 anliegt.

Weiterhin ist es zwar zweckmäßig, wenn eine Führungsnut im Wesentlichen zueinander winkelige Innenseiten aufweist, insbesondere U-förmige Innenseiten. Es ist aber bei einer erfindungsgemäßen Anhängekupplung auch möglich, dass ein Mitnehmer beispielsweise im Querschnitt U-förmige oder V-förmige Innenkontur oder Führungskontur aufweist, wobei dann die am Kuppelkörper vorhandene Lageraufnahme oder Führungsnut eine korrespondierende Innenkontur aufweist, d.h. ebenfalls eine V-förmige oder U-förmige Kontur. Weiterhin ist es möglich, dass die Führungsnut 47 ausgerundet ist und der in die Führungsnut 47 oder Lageraufnahme 34 eingreifende Lagervorsprung oder die Lagerfläche am Mitnehmer 33 dann beispielsweise ebenfalls eine (außenseitig) gerundete Kontur aufweist, angedeutet durch eine schematisch in Figur 8 eingezeichnete Führungskontur 63.

Nicht nur die Montage des Mitnehmers 33, sondern auch die Montage der Sensoranordnung 30 selbst gelingt äußerst einfach:
Die Sensoraufnahme 32 kommuniziert mit einem Anschlusskanal 48. Der Anschlusskanal 48 hat zueinander winkelige erste und zweite Anschlusskanalabschnitte 49, 50. Der erste Anschlusskanalabschnitt 49 führt von einer Unterseite 29 des Kuppelkörperträgers 13 bis in einen mittleren, zentralen Bereich des Kuppelkörpers 15. Dort ist er mit dem zweiten Anschlusskanalabschnitt 50 verbunden, der seinerseits bis zur Sensoraufnahme 32 führt.

Der erste Anschlusskanalabschnitt 49 ist mit einem ersten Montagekanal 51 verbunden. Der zweite Anschlusskanalabschnitt 50 ist mit einem zweiten Montagekanal 52 verbunden. Der erste Montagekanal 51 und der erste Anschlusskanalabschnitt 49 bilden insgesamt einen ersten Durchgangskanal 53. Ein zweiter Durchgangskanal 54 wird vom Anschlusskanalabschnitt 50 und vom zweiten Montagekanal 52 gebildet.

Die Durchgangskanäle 53, 54 weisen insgesamt einen durchgängigen, gleichförmigen Querschnitt auf.

Der erste Montagekanal 51 bzw. der erste Durchgangskanal 53 erstrecken sich von der Oberseite des Kuppelkörpers 15, d.h. von der Abflachung 25, durch den Kuppelkörper 15, den Halsabschnitt 26 und den vorderen, freien Endbereich des Armabschnitts 27 hindurch bis zur Unterseite 29. Der erste Durchgangskanal 53 verläuft also in einer insbesondere zentralen Vertikalebene der Anhängekupplung 10 bzw. des Kuppelkörpers 15.

Der zweite Durchgangskanal 54 verläuft dazu rechtwinkelig, aber ebenfalls zentral, jedoch ausschließlich im Kuppelkörper 15. Der zweite Durchgangskanal 54 verläuft in einer Äquatorialebene des Kuppelkörpers 15.

Die Durchgangskanäle 53, 54 können zweckmäßigerweise durch sich kreuzende Bohrungen gebildet sein. Es ist also möglich, die Anhängekupplung 10 insgesamt herzustellen, d.h. eine Baueinheit aus Kuppelkörperträger 13 und Kuppelkörper 15 zu bilden, beispielsweise durch Schmieden, Gießen oder dergleichen, um diese anschließend durch zwei sich kreuzende Bohrungen zu durchsetzen, wobei dadurch dann der erste und zweite Durchgangskanal 53, 54 gebildet sind. Der Kupplungsarm wird also nicht oder nur unwesentlich geschwächt.

Dennoch gelingt die Montage der Sensoranordnung 30 sowie einer zum Sensor 31 führenden Verbindungsleitung sehr einfach. Der Sensor 31 kann beispielsweise von vorn, d.h. von der Lageraufnahme 34 her, in die Sensoraufnahme 32 eingesetzt werden. Die Verbindungsleitung 55 wird sodann durch die Anschlusskanalabschnitte 49, 50 hindurch bis zur Unterseite 29 geführt. Dabei ist es hilfreich, dass man mit einem Montagewerkzeug, beispielsweise durch den ersten oder zweiten Montagekanal 51, 52 (angedeutet durch Pfeile 60, 61) hindurchgreifen kann, um die Verbindungsleitung 55 sozusagen in den ersten und zweiten Anschlusskanalabschnitt 49, 50 einzubringen.

Die Sensoraufnahme 32 ist zur Außenseite des Kuppelkörpers 15 hin, vorliegend also zur Führungsnut 47 hin, etwas aufgeweitet. Beispielsweise hat sie einen trompetenförmigen, langgestreckten Innenraum, so dass zwischen dem Sensor 31 und einer Innenwand 56 der Sensoraufnahme 32 ein Abstand vorhanden ist.

Es versteht sich, dass die Sensoraufnahme 32, ebenso wie die Mündungen der Montagekanäle 51, 52 ohne Weiteres verschließbar sind, beispielsweise durch Ausgießen, Einstecken eines Deckels oder dergleichen, um ein Eindringen von Schmutz zu verhindern.

Ferner ist es möglich, den Sensor 31 in der Sensoraufnahme 32 zu vergießen, um ihn zu schützen und mechanisch ortsfest festzulegen.

Die Verbindungsleitung 55 ist beispielsweise durch einen Kanal 57, der offen oder geschlossen sein kann, an der Unterseite 29 des Kuppelkörperträgers 13 entlanggeführt, um eine zweckmäßigerweise ortsfest am Kraftfahrzeug 12 angeordnete, vorteilhaft einen Bestandteil der Anhängekupplung 10 bildenden Auswerteeinrichtung 58 zu verbinden.

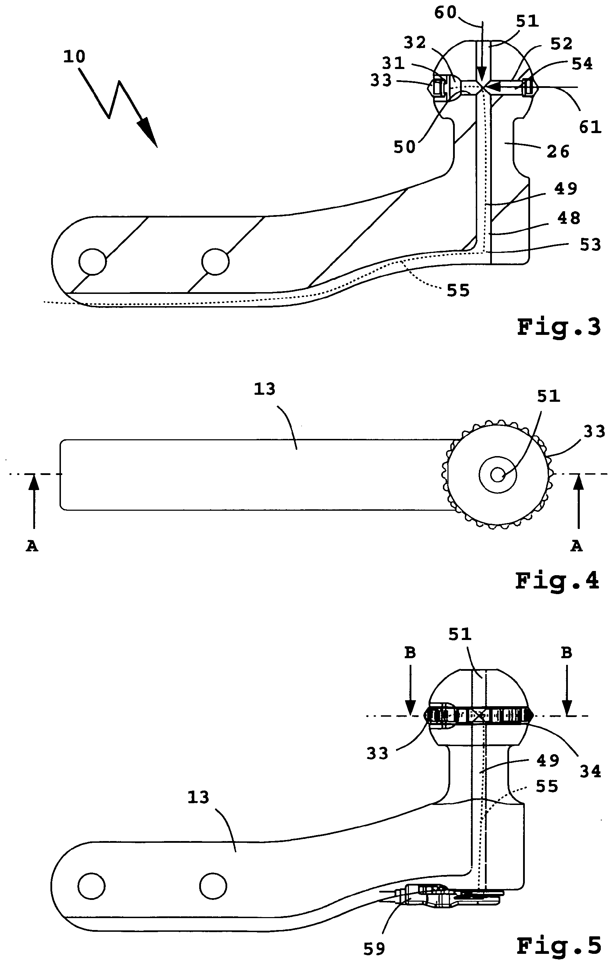

Es versteht sich, dass eine Auswerteeinrichtung auch direkt an der Kugelstange angeordnet sein kann. Exemplarisch ist ein Modul 59 in Figur 5 eingezeichnet, das an der Unterseite 29 montierbar oder montiert ist.

Die Auswerteeinrichtung 58 und/oder das Modul 59 sind vorzugsweise dazu ausgestaltet, vom Sensor 31 erzeugte Signale auszuwerten und insbesondere in relative Winkelsignale umzuwandeln, die dann von einer Fahrzeugelektrik des Kraftfahrzeuges 12 ausgewertet werden können. Die Auswerteeinrichtung 58 und/oder das Modul 59 weisen hierzu zweckmäßigerweise eine Bus-Schnittstelle, insbesondere eine CAN-Bus-Schnittstelle, eine LIN-Bus-Schnittstelle oder dergleichen, auf.

Eine in Figur neun dargestellte Anhängekupplung 10b entspricht im Wesentlichen der Anhängekupplung 10, hat jedoch einen anderen Kuppelkörper 15b sowie einen alternativ ausgestalteten Mitnehmer 33b. Der Mitnehmer 33b ist oberhalb einer Äquatorialebene 70 des Kuppelkörpers 15b angeordnet. Die Äquatorialebene 70 ist zugleich der Bereich des größten Außenumfangs 75 des Kuppelkörpers 15b zwischen seiner Oberseite 71 und seiner mit dem Kuppelkörperträger 13 bzw. dem Halsabschnitt 26 verbundenen Unterseite 72. An der Oberseite 71 ist eine Stützfläche 73 vorhanden, d.h. der Kuppelkörper 15b ist sowohl in seinem sich oberhalb der Äquatorialebene 70 erstreckenden Äquatorialbereich 74 als auch an seiner Oberseite 71 massiv, so dass er die Zugkupplungsaufnahme 18 jedenfalls in einem Bereich unterhalb der Äquatorialebene 70 stützen kann. Dies ist wesentlich für einen so genannten Abzugstest oder Hebetest, bei dem geprüft wird, ob die Zugkupplungsaufnahme 18 am Kuppelkörper 15b hält, wenn eine Kraft nach oben auf die Zugkupplung 16 wirkt.

Eine untere Wand einer Führungsnut 47b, in der der Mitnehmer 33b aufgenommen ist, verläuft knapp oberhalb der Äquatorialebene 70 .

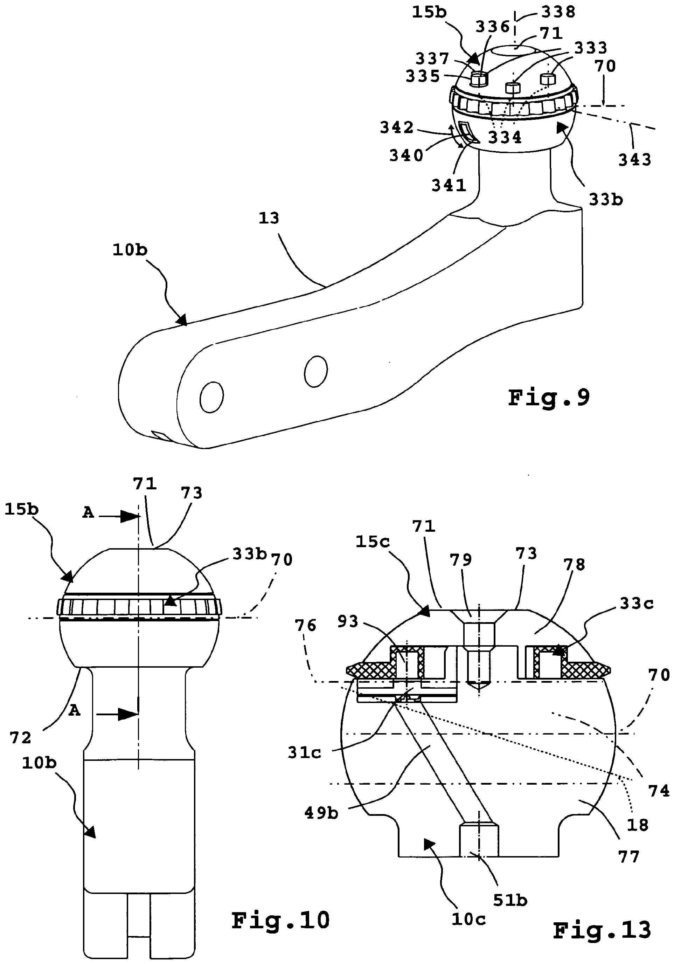

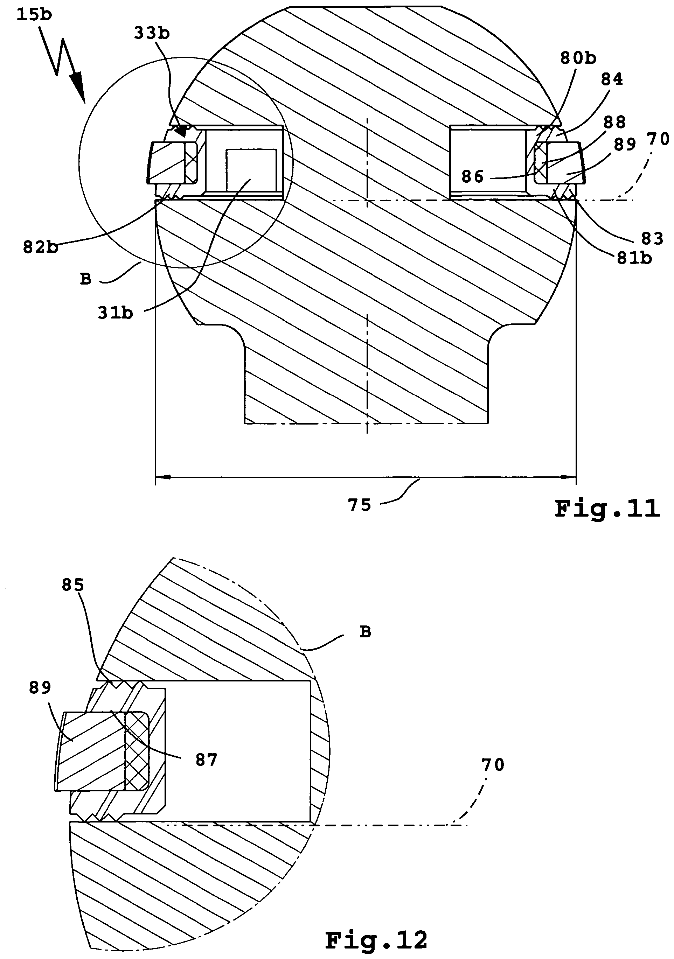

Es ist jedoch vorteilhaft, wenn eine Führungsnut noch weiter oben, d.h. weiter weg von der Äquatorialebene 70 an einem Kuppelkörper einer erfindungsgemäßen Anhängekupplung angeordnet ist. So ist beispielsweise bei einer Anhängekupplung 10c (Figur 13) eine dargestellte Führungsnut 47c vorgesehen, die im Bereich einer Quermittelebene 76 zwischen der Oberseite 71 und der Äquatorialebene 70 verläuft. Somit steht auch bei dieser Ausführungsform an der Oberseite 71 eine Stützfläche 73 bereit. Allerdings ist der Äquatorialbereich 74, d.h. der massive Teil des Kuppelkörpers 15b breiter. Somit kann die beispielsweise um eine Schrägneigung von 10°, besonders bevorzugt 15° oder auch 20°, insbesondere sogar 25° schräg zum Kuppelkörper 15b stehende Zugkupplungsaufnahme 18 (beispielhaft in Figur 11 eingezeichnet) am massiven Äquatorialbereich 74 des Kuppelkörpers 15b angreifen und findet dort festen Halt, kann also nicht vom Kuppelkörper 15b abgezogen werden.

An dieser Stelle sei bemerkt, dass der Kuppelkörper 15b einstückig sein oder selbstverständlich aber auch mehrteilig sein kann, beispielsweise wie ein Kuppelkörper 15c der Anhängekupplung 10c ein Unterteil 77 und ein Oberteil 78 aufweisen kann, was beispielsweise die Montage der Anhängekupplung 10b oder 10c erleichtert. Oberteil 78 ist beispielsweise an das Unterteil 77 angeklebt, mit diesem mittels z.B. einer Schraube 79 verschraubt oder dergleichen.

Im Innern des Kuppelkörpers 15c ist ein schematisch dargestellter Sensor 31c vorgesehen, beispielsweise an einem Nutboden oder einer Seitenwand der Führungsnut 47c , die ganz allgemein auch eine Lagerausnehmung bildet. Es versteht sich, dass wie beim Ausführungsbeispiel der oben beschriebenen Anhängekupplung 10 auch eine Kanalanordnung mit einem oder mehreren Montagekanälen 51b und/oder Sensorkanälen 51b vorgesehen sein kann.

Es versteht sich, dass der Begriff "Führungsnut" allgemein als eine Lageraufnahme zum Lagern eines Mitnehmers zu verstehen ist. Man erkennt beispielsweise, dass die Führungsnut 47c einen anderen als einen U-förmigen Querschnitt aufweist.

Weiterhin kann beispielsweise der Mitnehmer 33c aufgrund der mehrteiligen Bauweise des Kuppelkörpers 15c ohne weiteres auch einstückig sein, also einen Ring bilden, der in die Lageraufnahme oder Führungsnut 47c eingesetzt werden kann.

Ein Mitnehmer 33c der Anhängekupplung 10c hat z.B. eine ringförmige Aufnahme 93 oder zweckmäßigerweise entlang eines Rings angeordnete Taschen zur Aufnahme von Gebern für den Sensor 31c, zum Beispiel magnetischen Gebern. Die Aufnahme 93 bzw. die Geber liegen dem Sensor 31c gegenüber.

Der Mitnehmer 33b ist mehrteilig aufgebaut. Er umfasst einen Träger 80b, der in der Führungsnut 47b oder 47c anordenbar ist. Der Träger 80b bildet insgesamt einen Ring, ist jedoch aus mehreren, zum Beispiel 2, Ringsegmenten 81b, 82b zusammengesetzt. Dies erleichtert insbesondere die Montage des Trägers 80b in der Führungsnut 47b, 47c.

Der Träger 80b hat an seinen den Seitenwänden der Führungsnut 47b zugeordneten Seitenwänden 83, 84 Rippen oder Gleitvorsprünge 85, die an den Seitenwänden der Führungsnut 47b entlang gleiten und die Reibung verringern. Die Rippen oder Gleitvorsprünge 85 sind zweckmäßigerweise ringförmig. Vorzugsweise sind mehrere zueinander konzentrische Gleitvorsprünge bei einem erfindungsgemäßen Mitnehmer vorgesehen. Es versteht sich, dass diese Gleitvorsprünge - es kann auch nur ein solcher vorgesehen sein - nicht nur an einem Träger wie beim Mitnehmer 33b vorgesehen sein können, sondern auch an einer sonstigen Komponente eines erfindungsgemäß ausgestalteten Mitnehmerteils.

Radial innen hat der Mitnehmer 33b eine Umfangswand 86. Von den Seitenwänden 83, 84 und der Umfangswand 86 ist eine Aufnahme 87 begrenzt. Die Aufnahme 87 dient zum Halten und Aufnehmen einer Kompressionslage 88 und eines Mitnehmerteils 89. Die Kompressionslage 88 wird beispielsweise von einer PolyurethanSchicht oder einem Polyurethan-Ring gebildet, der am Boden der Aufnahme 87 angeordnet ist. Die Kompressionslage 88 ist nachgiebig. Somit kann das Mitnehmerteil 89 nach radial innen in die Aufnahme 87 hinein verstellt werden, d.h. dass die Kompressionslage 88 dann nachgibt. Das Mitnehmerteil 89 selbst kann verhältnismäßig steif und/oder abriebfest sein. Die Nachgiebigkeit bei Einwirkung eines Drucks durch die Zugkupplungsaufnahme 18 wird quasi von der Kompressionslage 88 bereitgestellt.

Das Mitnehmerteil 89 ist zweckmäßigerweise von einem zahnriemenartigen Ring gebildet, der gedehnt werden kann, um am Träger 80b befestigt zu werden, wenn der Träger 80b bereits fertig montiert ist. Das Mitnehmerteil 89 steht nach radial außen vor den Träger 80b vor, so dass der für eine Drehmitnahme durch die Zugkupplungsaufnahme 18 bereitsteht.

In der Zeichnung ist die Kompressionslage 88 verhältnismäßig dünn im Vergleich zum Mitnehmerteil 89 dargestellt. Es versteht sich, dass die Kompressionslage 88 zweckmäßigerweise eine wesentlich größere Stärke oder Dicke aufweisen kann, so dass sie besonders nachgiebig ist. Gerade dadurch ist es möglich, dass das Mitnehmerteil 89 relativ stark verformt wird, um sich an eine Innenkontur der Zugkupplungsaufnahme 18 anzupassen und somit von dieser möglichst ohne Schlupf und Abrieb mitgenommen werden kann.

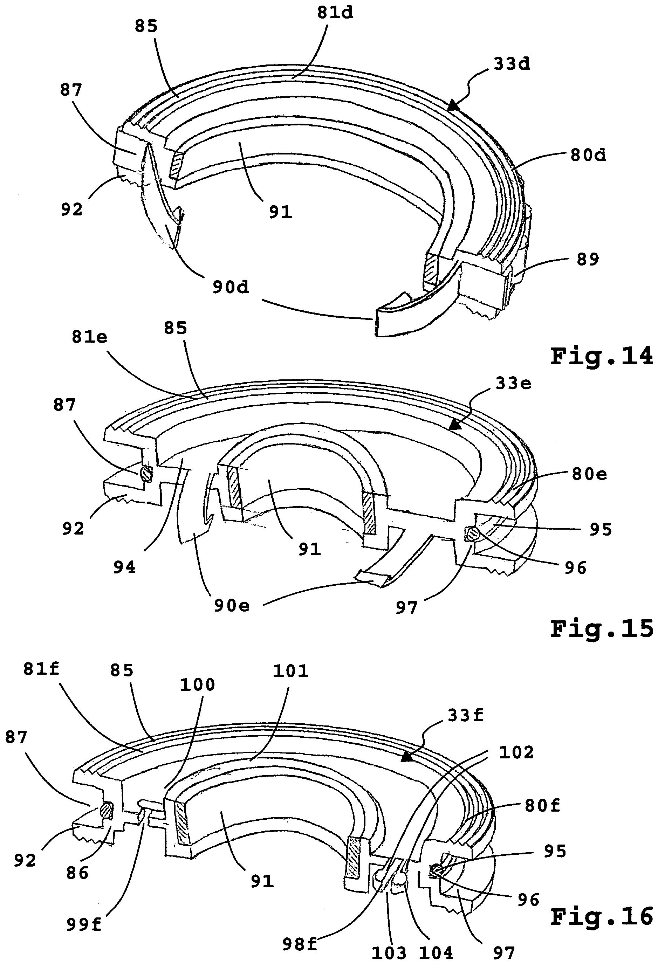

In den Figuren 14-22 sind verschiedene Ausgestaltungen von Trägern bzw. Ringsegmenten von Trägern erfindungsgemäßer Mitnehmer dargestellt, bei denen unterschiedliche Verbindungstechniken zum Einsatz kommen, mit denen die Ringsegmente miteinander verbunden oder verbindbar sind. Gleiche oder gleichartige Komponenten sind bei diesen weiteren Ausführungsbeispielen mit den bereits bekannten Bezugszeichen versehen.

Ein Ringsegment 81d eines Trägers 80d eines Mitnehmers 33d weist beispielsweise vor seine Längsenden vorstehende Haken 90d auf, die in Hakenaufnahmen oder Widerlager eines in der Zeichnung nicht dargestellten, komplementären Ringsegments einhakbar sind. Am Innenumfang des Trägers 80d ist ein Geber-Ring 91 vorgesehen, der beispielsweise Magnet ist oder nicht dargestellte Einzelmagnete aufweist. Die Haken 90d stehen vor Stirnseiten 92 der Längsenden des Ringsegments 81d vor.

Bei einem Ringsegment 81e eines Trägers 80e eines Mitnehmers 33e sind Haken 90e vorgesehen, die ebenfalls in Aufnahmen eines komplementären, nicht dargestellten Ringsegments des Trägers 80e eingreifen können. Im Unterschied zum Ringsegment 81d sind jedoch die Haken 90e nicht in Umfangsrichtung des Ringsegments 81e verlaufend, sondern stehen vor obere und/oder untere Stirnseiten 94 des Ringsegments 81e vor. Dabei ist es vorteilhaft, wenn einer der Haken 90e an einer oberen Stirnseite 94, der andere Haken 90e an einer unteren Stirnseite 94 angeordnet ist, so dass die Haken 90e voneinander entgegengesetzten Seiten her in Aufnahmen an dem nicht dargestellten weiteren Ringsegment des Mitnehmers 33e eingreifen.

Als zusätzliche Sicherung bzw. als verbesserter Halt des Ringsegments 81 am anderen Ringsegment dient eine Klammer 95, die vorliegend als Sprengring 96 ausgestaltet ist. Die Klammer 95 umgreift beide Ringsegmente jedenfalls soweit, dass ein größter Umfang des Mitnehmers 33e geklammert ist. Vorzugsweise ist an den Ringsegmenten des Mitnehmers 33e eine Aufnahme 97, beispielsweise eine Vertiefung am Boden der Aufnahme 87, vorgesehen.

Bei einem Mitnehmer 33f sind dessen Ringsegmente 81f gleichartige ausgestaltet, d.h. es ist ein Gleichteilprinzip realisiert. Zur Verbindung der Ringsegmente 81f dienen Rastvorsprünge 98f, die in korrespondierende Rastaufnahmen 99f am jeweils anderen Ringsegment 81f einrasten können. Die Rastvorsprünge 98f und die Rastaufnahmen 99f sind einen den jeweiligen Längsend-Stirnseiten 92 vorgesehen. Die Rastvorsprünge 98f und die Rastaufnahmen 99f sind beispielsweise an einer Wand 100 angeordnet, die sich zwischen der Umfangswand 86 und einer Stützwand 101 zum Abstützen des Geber-Rings 91 befindet. Ein jeweiliger Rastvorsprung 98f umfasst beispielsweise 2 Rastarme 102, die flexibel sind und zwischen denen ein Abstand 103 vorhanden ist, so dass sie zueinander hin federn können. Damit ist es möglich, dass Haltevorsprünge 104 außer Eingriff mit einer korrespondierenden Ausnehmungen der Rastaufnahme 98f gelangen können.

Ein Mitnehmer 33g entspricht im Wesentlichen dem Mitnehmer 33f, wobei an seinen Ringsegmenten 81g etwas modifizierte Rastvorsprünge 98g vorhanden sind. Dessen Rastarme 102 sind zwar ebenfalls mit einem Abstand 103 voneinander beanstandet, sind jedoch stirnseitig durch ein Verbindungselement 105 miteinander verbunden. Dennoch können die beiden Arme 102 zueinander hin federn, um in Rastaufnahmen 99g am jeweils anderen Ringsegment 81g einzurasten. Dort sind Vertiefungen für die Haltevorsprünge 104 vorhanden. Beispielsweise sind die Rastaufnahmen 99g einen einer Wand 100 angeordnet, die von der Umfangswand 86 nach radial innen absteht.

Ein Mitnehmer 33h entspricht im Wesentlichen dem Mitnehmer 33d, wobei jedoch Ringsegmente 81h des Mitnehmers 33h einem Gleichteilprinzip folgen. Es können also 2 Ringsegmente 81h zu einem Gesamtring miteinander verbunden werden. Ein den Haken 90d entsprechender Haken 90h kann in eine Hakenaufnahme 106 am jeweils anderen Ringsegment 81h einen gehackt werden. Der Haken 90h ist also einen Umfangsrichtung verlaufender Haken. Sein Hakenvorsprung steht nach radial innen vor, so dass er in die beispielsweise im Bodenbereich der Aufnahme 87 für den Sprengring 96 oder der Aufnahme 87 für das Mitnehmerteil 89 angeordnete Hakenaufnahme 106 einhaken kann. Wenn beispielsweise der Sprengring 96 oder das Mitnehmerteil 88 am Träger 80h montiert sind, drücken sie den Haken 90h in die Hakenaufnahme 106 oder sichern den Haken 90h in der Hakenaufnahme 106.

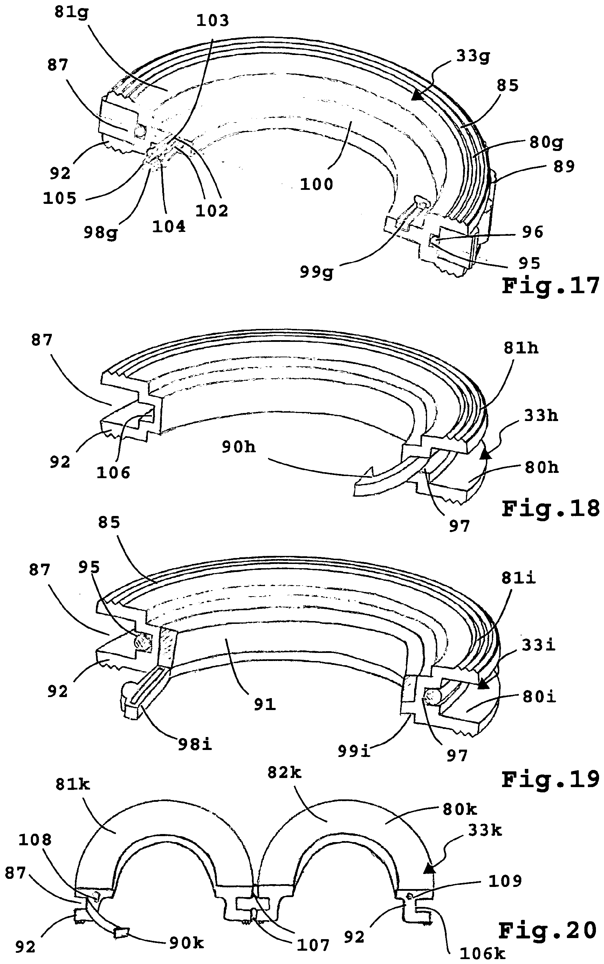

Bei einem Ringsegment 81i eines Trägers 80i eines Mitnehmers 33i (Figur 19) ist ein vor die Stirnseiten 92 vorstehender, nach radial innen federnd dar Rastvorsprung 98i, den man auch als einen Haken ansehen könnte, vorgesehen. Der Rastvorsprung 98i federt nach radial innen, um in eine Rastaufnahme 99i am jeweils anderen Ringsegment 81i ein zu rasten. Beispielsweise sind die Rastaufnahmen 99i an radial inneren Seiten der Umfangswände 86 vorgesehen. Ein jeweiliger Haltevorsprung 104 steht nach radial außen vor einen Rastvorsprung 98i vor, so dass er in eine korrespondierende Ausnehmung, nämlich die Rastaufnahme 99i einrasten kann.

Ein Mitnehmer 33k umfasst Ringsegmente 81k, 82k, die durch ein Gelenk 107 gelenkig miteinander verbunden sind, beispielsweise durch ein Drehlager, oder wie beim Ausführungsbeispiel mittels eines Filmscharniers. Vor das Ringsegment 81k steht einen Haken 90k vor, der in eine Hakenaufnahme 106k am anderen Ringsegment 82k ein Haken kann. Im Prinzip entsprechen die Ringsegmente 81k und 82k dem Ringsegment 81h, sind jedoch gelenkig miteinander verbunden. Vorteilhaft ist zusätzlich zu der Verpackung noch ein formschlüssiger Halt vorgesehen. Beispielsweise steht vor die Stirnseite 92 des einen Ringsegments 81k ein Vorsprung 108 vor, der in eine Aufnahme 109 an der im montierten Zustand gegenüberliegenden Stirnseite 92 formschlüssig eingreift. Der Vorsprung 108 ist beispielsweise als ein Steck-Zapfen ausgestaltet.

Ein Träger 80m eines Mitnehmers 33m entspricht im Wesentlichen dem Träger 80h, jedenfalls was das Verbinden seiner Ringsegmente 81m mittels Haken 90m angeht, die in Hakenaufnahmen 106 einhakbar sind. Allerdings ist ein innovatives Konzept zur Befestigung von Gebern 35m, vorliegend beispielsweise Magneten realisiert, die zur Betätigung beispielsweise des Sensors 31 dienen. An seinem Innenumfang hat der Träger 80m Aufnahmen 110m, beispielsweise Taschen oder Steckaufnahmen, in die die Geber 35m einsteckbar sind. Die Geber 35m sind in den Aufnahmen 110m verrastbar. Beispielsweise haben die Geber 35m Steckvorsprünge 111, oberhalb derer oder an denen Rastvertiefungen 112 vorgesehen ist. Die Steckvorsprünge 111 können zwischen Rastvorsprüngen 113, die an einander gegenüberliegenden Innenwänden der Aufnahmen 100 vorgesehen sind, hindurch gesteckt werden, bis die Rastvorsprünge 113 in die Rastvertiefungen 112 einrasten.

Ein Träger 80o eines Mitnehmers 33o entspricht zwar etwa dem Träger 80i, jedenfalls was das Konzept des Verhakens bzw. Verbinden seiner Ringsegmente 81o angeht. Der Träger 80o hat Aufnahmen 110o zur Aufnahme von Gebern 35o, beispielsweise Magneten, oder auch sonstigen Elementen, die beispielsweise ein Feld oder Signal erzeugen können. Die Geber 35o haben an ihren Stirnseiten Aufnahmen 114, die in Vorsprünge 115 ein den jeweiligen Böden der Aufnahmen 110o eingreifen und so für einen festen Halt sorgen. Selbstverständlich können die Geber 35o auch in die Aufnahmen 110o eingeklebt werden. Auch ein Klemmsitz ist vorteilhaft.

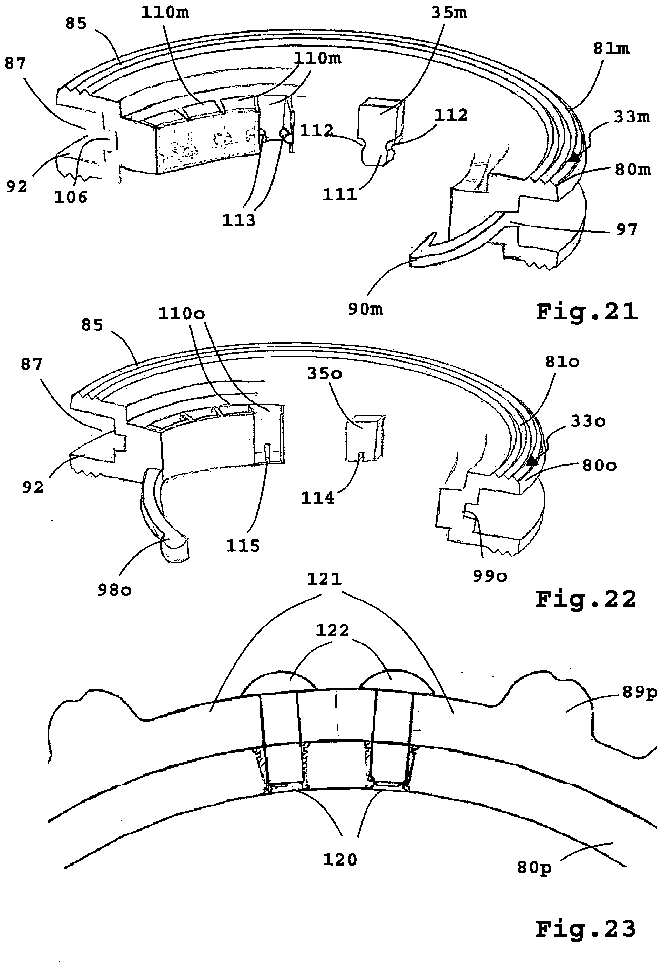

Ein Mitnehmerteil 89p ist an einem Träger 80p gemäß dem in Figur 22 dargestellten Konzept verschraubt. Beispielsweise hat der Träger 80p Bohrungen 120, insbesondere im Mikrogewinde oder dergleichen, die beispielsweise am Boden der Aufnahme 87 oder einem sonstigen Haltekontur vorgesehen sind. Längsenden 121 des Mitnehmerteils 89p sind von Bolzen 122 durchdrungen, beispielsweise Schraubbolzen, Nieten oder dergleichen, die in die Bohrungen oder Aufnahmen 120 eindringen. Somit kann also beispielsweise das Mitnehmerteil 89p relativ dehnfest sein, beispielsweise auch einen Einleger aus Metall umfassen. Dennoch ist das Mitnehmerteil 89p leicht am Träger 80p montierbar. Der Träger 80p kann selbstverständlich wie bei den obigen Ausführungsbeispielen 2 oder mehr Ringsegmente umfassen, die am jeweiligen Kuppelkörper angeordnet und dort miteinander verbunden sind.

An dieser Stelle ist auch nachzutragen, dass selbstverständlich die Ausführungsbeispiel gemäß Figuren 14-20 nur exemplarisch zu verstehen sind, d.h. dass anstelle von 2 Ringsegmenten selbstverständlich auch weitere, beispielsweise 3 oder 4 Ringsegmente zur Bildung eines Gesamt-Rings, vorgesehen sein können.

Selbstverständlich ist es nicht notwendig, ein strangartiges Mitnehmerteil, das offene Längsenden hat, direkt am Träger zu befestigen, wie beim Ausführungsbeispiel gemäß Figur 23. Beispielsweise sind Längsenden 122 eines Mitnehmerteils 89q an einem Träger, beispielsweise dem Träger 80g, anhand eines Verbindungsglieds 125 miteinander verbunden. Das Verbindungsglied 125 ist beispielsweise als ein Stanz-Biegeteil ausgestaltet. Vorzugsweise besteht Das Verbindungsglied 125 aus Metall, zum Beispiel Stahlblech, Aluminiumblech oder dergleichen.

Das Verbindungsglied 125 weist eine Basis 126 auf, die sich über die jeweiligen Längsenden 121 des Mitnehmerteils 89q erstreckt. Beispielsweise ist die Basis 126 am einen Längsende 121 angeklebt. Von der Basis 126 stehen an einander entgegengesetzten Seiten jeweils Arme 127 ab. Die Arme 127 können mehrfach oben gebogen werden, so dass sie in Vertiefungen zwischen den Mitnahmevorsprüngen 41 oder Zähnen eingreifen können. Es ist vorteilhaft, die Arme 127 und oder die Basis 126, jedenfalls insgesamt das Verbindungsglied 125 formschlüssig, beispielsweise mittels einem Körner, mit dem Mitnehmerteil 89q zu verbinden.

Die bisher erläuterten Ausführungsbeispiele zeigen Mitnehmer, die als Ring ausgestaltet sind. Aber auch bei anderen Bauarten von Mitnehmern, die von einer Zugkupplung eines Anhängers mitgenommen werden können und somit eine sensorische Erfassung einer Winkelstellung, beispielsweise einer Winkelstellung um eine vertikale Achse oder auch eine horizontale Achse, geeignet sind, ist es vorteilhaft, wenn sie so an einem Kuppelkörper, insbesondere einer Kupplungskugel, platziert sind, das eine Äquatoriallinie massiv ist, das heißt dass gerade dort kein Mitnehmer angeordnet ist. Vorteilhaft ist auch vorgesehen, dass eine Oberseite des Kuppelkörpers, auf der die Zugkupplung aufliegen kann, ebenfalls nicht durch einen Mitnehmer geschwächt ist. Beispielhaft ist dies bei der Anhängekupplung 10b in Figur 9 dargestellt.

So sind beispielsweise 3 am Umfang des Kuppelkörpers 15b als Rollen ausgestaltete Mitnehmer 333 vorhanden, die jeweils um eine Drehachse 334 drehbar sind. Die Mitnehmer 333 sind zwischen einer Oberseite 71 und einer Äquatorialebene 70 des Kuppelkörpers 15b angeordnet.

Ein Teil 335 des Außenumfangs eines jeweiligen Mitnehmers 333 steht nach außen vor den Außenumfang bzw. die Oberfläche 23b des Kuppelkörpers 15b vor, während ein anderer Umfangsteil 336 in einer nur angedeuteten Ausnehmung 337 des Kuppelkörpers 15b eintaucht, wo auch beispielsweise ein Drehlager für einen jeweiligen Mitnehmer 333 vorhanden ist. Die Mitnehmer 333 können also von der Zugkupplung 16 gedreht werden, wenn sich die Zugkupplung 16 um die Hochachse 338 des Kuppelkörpers 15b dreht. Die Mitnehmerkörper 33 enthalten beispielsweise einen oder mehrere Magnete, um in der Zeichnung nicht dargestellte Sensoren zu betätigen, optische Markierungen oder dergleichen. Es versteht sich, dass die Mitnehmer 333 nicht nur Sensorgeber, sondern auch Sensoren, enthalten können.

Als ein Beispiel für einen linear beweglichen Mitnehmer ist ein Mitnehmer 340 angedeutet, der in einer Aufnahme 341 schiebebeweglich aufgenommen ist. Die Aufnahme 341 befindet sich an einer unteren Hälfte, mithin einem Unterteil 77, der Kupplungskugel bzw. des Kuppelkörpers 15b. Selbstverständlich wäre auch eine Anordnung des Mitnehmers 340 oberhalb der Äquatorialebene 70 ohne weiteres möglich. Mit dem Mitnehmer 340 kann ein in der Zeichnung nicht dargestellter Sensor, beispielsweise ein magnetischer Sensor oder optischer Sensor, betätigt werden. Der Mitnehmer 340 bildet beispielsweise einen Bestandteil einer Sensoranordnung, mit der eine Schwenkbewegung der Zugkupplung 16 um eine in Fahrzeugquerrichtung verlaufende Achse 343 messbar ist, wobei der Mitnehmer 340 dabei eine Linearbewegung bzw. Schwenkbewegung gemäß einem Pfeil 342 durchläuft.

## Patentansprüche

1. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, außenseitig zumindest abschnittsweise kugelförmigen Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, wobei an dem Kuppelkörper (15) ein insbesondere ringförmiger Mitnehmer (33) beweglich, insbesondere drehbar, gelagert ist, der von der Zugkupplungsaufnahme (18) mitnehmbar und relativ zu dem Kuppelkörper (15) verstellbar, insbesondere verdrehbar, ist, wobei der Mitnehmer (33) einen Bestandteil einer Sensoranordnung (30) zur Erfassung einer Winkelstellung der Zugkupplung (16) relativ zu dem Kuppelkörperträger (13) bildet, wobei der Kuppelkörper (15) zwischen seiner von dem Kuppelkörperträger (13) abgewandten Oberseite und dem Kuppelkörperträger einen Äquatorialbereich mit einem maximalen Außenumfang aufweist, und wobei der Mitnehmer (33) oberhalb oder unterhalb des Äquatorialbereichs des Kuppelkörpers (15) angeordnet ist, so dass der maximale Außenumfang des Kuppelkörpers (15) in dem Äquatorialbereich zum Halten der Zugkupplungsaufnahme (18) bereit steht, **dadurch gekennzeichnet, dass** mindestens ein Sensor (31) ortsfest in dem Kuppelkörper (15) und einer oder mehrere Geber an dem Mitnehmer (33) angeordnet sind oder ein Sensor am Mitnehmer (33) angeordnet ist, der von einem ortsfest in dem Kuppelkörper (15) angeordneten Geber betätigbar ist.

2. Anhängekupplung nach einem der vorhergehenden Ansprüche, **dadurch gekennzeichnet, dass** der Mitnehmer (33) unterhalb der Oberseite des Kuppelkörpers (15) angeordnet ist, so dass an der Oberseite des Kuppelkörpers (15) eine obere Stützfläche vorhanden ist.

3. Anhängekupplung nach einem der vorhergehenden Ansprüche, **dadurch gekennzeichnet, dass** eine Breite des Äquatorialbereichs, oberhalb oder unterhalb dessen der Mitnehmer (33) angeordnet und in dem der Kuppelkörper (15) nicht durch den Mitnehmer (33) geschwächt ist, so bemessen ist, dass die Zugkupplungsaufnahme (18) bei einer Schrägstellung um einen vorbestimmten Winkel zu einer Äquatorialebene des Kuppelkörpers (15) den Kuppelkörper (15) im Bereich seines maximalen Außenumfangs in dem Äquatorialbereich umgreifen kann.

4. Anhängekupplung nach Anspruch 3, **dadurch gekennzeichnet, dass** der vorbestimmte Winkel mindestens 10 Grad zur Horizontalen, vorzugsweise mindestens 15 Grad zur Horizontalen, besonders bevorzugt mindestens 20 Grad zur Horizontalen, insbesondere mindestens 25 Grad zur Horizontalen beträgt.

5. Anhängekupplung nach einem der vorhergehenden Ansprüche, **dadurch gekennzeichnet, dass** der Mitnehmer (33) oberhalb oder unterhalb einer Äquatoriallinie oder Äquatorialebene des Kuppelkörpers (15) angeordnet ist.

6. Anhängekupplung nach einem der vorhergehenden Ansprüche, **dadurch gekennzeichnet, dass** der Mitnehmer (33) etwa im Bereich oder oberhalb oder unterhalb einer Quermittelebene des Kuppelkörpers (15) angeordnet ist, wobei die Quermittelebene zwischen der Oberseite des Kuppelkörpers (15) und einer Äquatorialebene des Kuppelkörpers verläuft.

7. Anhängekupplung nach einem der vorhergehenden Ansprüche, **dadurch gekennzeichnet, dass** der Mitnehmer (33) als ein einteiliger Ring ausgestaltet ist oder aus mindestens zwei Ringsegmenten gebildet ist oder mindestens 2 Ringsegmente umfasst, wobei zweckmäßigerweise mindestens 2 Ringsegmente des Mitnehmers mittels einer Rastanordnung und/oder mindestens einer Klammer und/oder anhand einer Verschraubung und/oder mittels einer Hakenanordnung miteinander verbunden oder verbindbar sind.

8. Anhängekupplung nach einem der vorhergehenden Ansprüche, **dadurch gekennzeichnet, dass** der Mitnehmer (33) oder ein zum Kontakt mit der Zugkupplung in Kontakt vorgesehener Mitnehmerring des Mitnehmers (33), insbesondere durch die Zugkupplung (16) oder eine Haltebacke (21) der Zugkupplung (16), und/oder im Sinne eines Aufweitens für die Montage an dem Kuppelkörper (15) elastisch verformbar ist.

9. Anhängekupplung nach einem der vorhergehenden Ansprüche, **dadurch gekennzeichnet, dass** an dem Mitnehmer (33) mindestens ein exzentrischer, elastischer oder nicht elastischer Vorsprung angeordnet ist.

10. Anhängekupplung nach einem der vorhergehenden Ansprüche, **dadurch gekennzeichnet, dass** der Mitnehmer (33) nach radial außen vorstehende, insbesondere flexible oder elastische, Mitnahmevorsprünge (41) und/oder eine Reibschlussfläche aufweist und/oder eine ballige Außenkontur und/oder Schlitze aufweist.

11. Anhängekupplung nach einem der vorhergehenden Ansprüche, **dadurch gekennzeichnet, dass** der Mitnehmer (33) und/oder ein Lagerbereich des Kuppelkörpers (15) zum Lagern des Mitnehmers (33) mit einer Gleitbeschichtung oder einer Gleitlage versehen sind und/oder der Mitnehmer (33) ein Lagerelement, insbesondere einen Wälzlager oder Rollenlager, zum Lagern an dem Kuppelkörper (15) aufweist.

12. Anhängekupplung nach einem der vorhergehenden Ansprüche, **dadurch gekennzeichnet, dass** der Mitnehmer (33) an einer, insbesondere unmittelbar in die Sensoraufnahme (32) übergehenden oder diese schneidenden, Lageraufnahme (34), insbesondere einer Führungsnut (47), des Kuppelkörpers (15) gelagert ist.

13. Anhängekupplung nach Anspruch 12, **dadurch gekennzeichnet, dass** die Lageraufnahme (34) an mindestens einem Bereich eine zu einer vollständigen Aufnahme eines Abschnitts (64) des Mitnehmers (33) ausreichende Tiefe aufweist, so dass der Abschnitt (64) des Mitnehmers (33) nicht oder nur mit Mitnahmevorsprüngen (41) vor die Lageraufnahme (34) nach außen vorsteht und/oder dass ein Abschnitt (65) des Mitnehmers (33) durch eine von der Zugkupplungsaufnahme (18) ausgeübte Beaufschlagung auf einen anderen Abschnitt (64) des Mitnehmers (33) aus der Lageraufnahme (34) heraus drückbar ist.

14. Anhängekupplung nach einem der vorhergehenden Ansprüche, **dadurch gekennzeichnet, dass** der Mitnehmer (33) radial mindestens 2 Komponenten oder Schichten enthält und/oder dass der Mitnehmer (33) einen radial innen bezüglich des Kuppelkörpers angeordneten Träger und ein radial außen bezüglich des Kuppelkörpers an dem Träger angeordnetes, insbesondere ringförmiges, Mitnehmerteil umfasst, wobei das Mitnehmerteil zur Drehmitnahme durch die Zugkupplungsaufnahme vorgesehen ist.

15. Anhängekupplung nach einem der vorhergehenden Ansprüche, **dadurch gekennzeichnet, dass** der Mitnehmer (33) mindestens einen als Rad oder Rolle (334) ausgestalteten Mitnehmer (33) umfasst, der drehbar am Kuppelkörper gelagert ist, wobei ein Teil des Außenumfangs des Mitnehmers (33) vor eine Oberfläche des Kuppelkörpers nach außen zur Drehmitnahme durch die Zugkupplung vorsteht, während ein anderer Teil des Außenumfangs des Mitnehmers (33) in einer Ausnehmung (337) des Kuppelkörpers aufgenommen ist, und/oder dass der Mitnehmer (33) einen am Kuppelkörper linear verschieblich gelagerten Mitnehmer (340) umfasst.

## Claims

1. Trailer coupling for a motor vehicle (12), in particular a car (12), for attaching a trailer (17) to the motor vehicle (12), with a coupling body support (13) which may be attached to the motor vehicle (12) and with a coupling body (15), at least partly spherical on the outside and mounted on a free end section of the coupling body support (13), and on which may be fitted a towing coupling seating (18) of a towing coupling (16) of the trailer, wherein the coupling body (15) forms for the towing coupling seating (18) a bearing body rotatably supporting the former for swivelling, in particular on a multi-axis swivel-jointed basis, relative to the coupling body support (13), wherein there is movably mounted on the coupling body (15), in particular rotatably, a driver (33), in particular annular, which may be driven by the towing coupling seating (18) and is adjustable, in particular rotatable, relative to the coupling body (15), wherein the driver (33) forms part of a sensor array (30) for detecting an angular position of the towing coupling (16) relative to the coupling body support (13), wherein the coupling body (15) has between its top facing away from the coupling body support (13), and the coupling body member, an equatorial zone with a maximum outer periphery, wherein the driver (33) is located above or below the equatorial zone of the coupling body (15), so that the maximum outer periphery of the coupling body (15) is available in the equatorial zone to hold the towing coupling seating (18), **characterised in that** at least one sensor (31) is mounted immovably on the coupling body (15) and one or more transmitters on the driver (33), or a sensor mounted on the driver (33) may be actuated by a transmitter mounted immovably in the coupling body (15).

2. Trailer coupling according to any of the preceding claims, **characterised in that** the driver (33) is located below the top of the coupling body (15), so that an upper support surface is provided on the top of the coupling body (15).

3. Trailer coupling according to any of the preceding claims, **characterised in that** a width of the equatorial zone arranged above or below that of the driver (33) and in which the coupling body (15) is not weakened by the driver (33), is so dimensioned that the towing coupling seating (18), in an inclined position around a predetermined angle to an equatorial plane of the coupling body (15), is able to encompass the coupling body (15) in the area of its maximum outer periphery in the equatorial zone.

4. Trailer coupling according to claim 3, **characterised in that** the predetermined angle is at least 10 degrees to the horizontal, preferably at least 15 degrees to the horizontal, especially preferably at least 20 degrees to the horizontal, in particular at least 25 degrees to the horizontal.

5. Trailer coupling according to any of the preceding claims, **characterised in that** the driver (33) is arranged above or below an equatorial line or equatorial plane of the coupling body (15).

6. Trailer coupling according to any of the preceding claims, **characterised in that** the driver (33) is located roughly in the area above or below a transverse central plane of the coupling body (15), wherein the transverse central plane runs between the top of the coupling body (15) and an equatorial plane of the coupling body.

7. Trailer coupling according to any of the preceding claims, **characterised in that** the driver (33) is in the form of a one-piece ring, or is formed by at least 2 ring segments, or includes at least two ring segments, wherein expediently at least 2 ring segments of the driver are or may be connected to one another by means of a latching arrangement and/or at least one clip, and/or with the aid of a screw connection and/or by means of a hook arrangement.

8. Trailer coupling according to any of the preceding claims, **characterised in that** the driver (33) or a driver ring of the driver (33) provided for and in contact with the towing coupling, may be deformed elastically by the towing coupling (16) or a holding jaw (21) of the towing coupling (16), and/or for the purpose of widening for fitting to the coupling body (15).

9. Trailer coupling according to any of the preceding claims, **characterised in that** at least one eccentric, elastic or non-elastic projection is provided on the driver (33) .

10. Trailer coupling according to any of the preceding claims, **characterised in that** the driver (33) has driving projections (41) protruding radially outwards, in particular flexible or elastic, and/or has a frictional connection face and/or a crowned external contour and/or slits.

11. Trailer coupling according to any of the preceding claims, **characterised in that** the driver (33) and/or a bearing section of the coupling body (15) is or are provided with an anti-friction coating or anti-friction layer to support the driver (33), and/or the driver (33) has a bearing element, in particular an anti-friction bearing or a roller bearing, for mounting on the coupling body (15).

12. Trailer coupling according to any of the preceding claims, **characterised in that** the driver (33) is mounted in a bearing location (34), in particular a guide slot (47) of the coupling body (15), in particular merging into or intersecting the sensor holder (32).

13. Trailer coupling according to claim 12, **characterised in that** the bearing location (34) has on at least one section a depth adequate for complete accommodation of a section (64) of the driver (33), so that the section (64) of the driver (33) does not protrude outwards beyond the bearing location (34) or only with driving projections (41), and/or that a section (65) of the driver (33) may be pressed out of the bearing location (34) by pressure exerted by the towing coupling seating (18) on another section (64) of the driver (33).

14. Trailer coupling according to any of the preceding claims, **characterised in that** the driver (33) contains radially at least 2 components or layers, and/or that the driver (33) includes a support located radially inwards relative to the coupling body, and a driver element, in particular annular, located radially outwards relative to the coupling body, wherein the driver element is provided for rotary driving through the towing coupling seating.

15. Trailer coupling according to any of the preceding claims, **characterised in that** the driver (33) includes at least one driver (33) in the form of a wheel or roller (334) which is mounted rotatably on the coupling body, wherein a portion of the outer periphery of the driver (33) protrudes outwards from a surface of the coupling body for rotary driving through the towing coupling, while another portion of the outer periphery of the driver (33) is held in a recess (337) of the coupling body, and/or that the driver (33) includes a driver (340) mounted with linear movement capability on the coupling body.

## Revendications

1. Attelage de remorque pour un véhicule à moteur (12), en particulier un véhicule à moteur de transport de personnes (12), pour atteler une remorque (17) au véhicule à moteur (12), avec un support de corps d'attelage (13) pouvant être fixé sur le véhicule à moteur (12) et un corps d'attelage (15) au moins par endroits en forme de boule côté extérieur disposé sur une zone d'extrémité libre du support de corps d'attelage (13), sur lequel un logement d'attelage de traction (18) d'un attelage de traction (16) de la remorque (17) peut être placé, dans lequel le corps d'attelage (15) pour le logement d'attelage de traction (18) forme un corps de montage, montant celui-ci de manière à pouvoir tourner, pour le pivotement articulé en rotation en particulier sur plusieurs axes par rapport au support de corps d'attelage (13), dans lequel un entraîneur (33) en particulier annulaire est monté de manière mobile, en particulier de manière à pouvoir tourner, sur le corps d'attelage (15), qui peut être entraîné par le logement d'attelage de traction (18) et peut être ajusté, en particulier tourné, par rapport au corps d'attelage (15), dans lequel l'entraîneur (33) forme une partie intégrante d'un ensemble de capteur (30) pour détecter une position angulaire de l'attelage de traction (16) par rapport au support de corps d'attelage (13), dans lequel le corps d'attelage (15) présente entre son côté supérieur opposé au support de corps d'attelage (13) et le support de corps d'attelage une zone équatoriale avec une périphérie extérieure maximale, et dans lequel l'entraîneur (33) est disposé au-dessus ou en dessous de la zone équatoriale du corps d'attelage (15) de sorte que la périphérie extérieure maximale du corps d'attelage (15) se tient prête dans la zone équatoriale pour maintenir le logement d'attelage de traction (18), **caractérisé en ce qu'**au moins un capteur (31) est disposé de manière stationnaire dans le corps d'attelage (15) et un ou plusieurs émetteurs sont disposés sur l'entraîneur (33) ou un capteur est disposé sur l'entraîneur (33), qui peut être actionné par un émetteur disposé de manière stationnaire dans le corps d'attelage (15).

2. Attelage de remorque selon l'une quelconque des revendications précédentes, **caractérisé en ce que** l'entraîneur (33) est disposé en dessous du côté supérieur du corps d'attelage (15) de sorte qu'une face d'appui supérieure est présente sur le côté supérieur du corps d'attelage (15).

3. Attelage de remorque selon l'une quelconque des revendications précédentes, **caractérisé en ce qu'**une largeur de la zone équatoriale, au-dessus ou en dessous de laquelle l'entraîneur (33) est disposé et dans laquelle le corps d'attelage (15) n'est pas affaibli par l'entraîneur (33), est dimensionnée de telle sorte que le logement d'attelage de traction (18) peut entourer le corps d'attelage (15) dans la zone de sa périphérie extérieure maximale dans la zone équatoriale pour une position oblique selon un angle prédéfini par rapport à un plan équatorial du corps d'attelage (15).

4. Attelage de remorque selon la revendication 3, **caractérisé en ce que** l'angle prédéfini est d'au moins 10 degrés par rapport à l'horizontale, de préférence d'au moins 15 degrés par rapport à l'horizontale, de manière particulièrement préférée d'au moins 20 degrés par rapport à l'horizontale, en particulier d'au moins 25 degrés par rapport à l'horizontale.

5. Attelage de remorque selon l'une quelconque des revendications précédentes, **caractérisé en ce que** l'entraîneur (33) est disposé au-dessus ou en dessous d'une ligne équatoriale ou d'un plan équatorial du corps d'attelage (15).

6. Attelage de remorque selon l'une quelconque des revendications précédentes, **caractérisé en ce que** l'entraîneur (33) est disposé à peu près dans la zone ou au-dessus ou en dessous d'un plan médian transversal du corps d'attelage (15), dans lequel le plan médian transversal s'étend entre le côté supérieur du corps d'attelage (15) et un plan équatorial du corps d'attelage.

7. Attelage de remorque selon l'une quelconque des revendications précédentes, **caractérisé en ce que** l'entraîneur (33) est configuré en tant qu'un anneau en une partie ou est formé à partir d'au moins deux segments annulaires ou comprend au moins 2 segments annulaires, dans lequel de manière opportune au moins 2 segments annulaires de l'entraîneur sont reliés ou peuvent être reliés l'un à l'autre au moyen d'un ensemble d'enclenchement et/ou d'au moins une attache et/ou à l'aide d'un vissage et/ou au moyen d'un ensemble formant crochet.

8. Attelage de remorque selon l'une quelconque des revendications précédentes, **caractérisé en ce que** l'entraîneur (33) ou un anneau d'entraîneur, prévu pour venir en contact avec l'attelage de traction, de l'entraîneur (33), peut être déformé élastiquement en particulier par l'attelage de traction (16) ou une mâchoire de retenue (21) de l'attelage de traction (16), et/ou au sens d'un élargissement pour le montage sur le corps d'attelage (15).

9. Attelage de remorque selon l'une quelconque des revendications précédentes, **caractérisé en ce qu'**au moins une partie faisant saillie excentrique, élastique ou non élastique est disposée sur l'entraîneur (33).

10. Attelage de remorque selon l'une quelconque des revendications précédentes, **caractérisé en ce que** l'entraîneur (33) présente des parties faisant saillie d'entraînement (41) faisant saillie vers l'extérieur radialement, en particulier flexibles ou élastiques et/ou une face à friction, et/ou présente un contour extérieur bombé et/ou des entailles.

11. Attelage de remorque selon l'une quelconque des revendications précédentes, **caractérisé en ce que** l'entraîneur (33) et/ou une zone de montage du corps d'attelage (15) pour monter l'entraîneur (33) sont pourvus d'un revêtement glissant ou d'une couche glissante et/ou l'entraîneur (33) présente un élément de montage, en particulier un palier à roulement ou un palier à rouleaux, pour le montage sur le corps d'attelage (15).

12. Attelage de remorque selon l'une quelconque des revendications précédentes, **caractérisé en ce que** l'entraîneur (33) est monté sur un logement de montage (34) en particulier se confondant directement avec le logement de capteur (32) ou coupant celui-ci, en particulier sur une rainure de guidage (47), du corps d'attelage (15).

13. Attelage de remorque selon la revendication 12, **caractérisé en ce que** le logement de montage (34) présente sur au moins une zone une profondeur suffisante pour un logement complet d'une section (64) de l'entraîneur (33) de sorte que la section (64) de l'entraîneur (33) ne fait pas saillie vers l'extérieur devant le logement de montage (34) ou seulement par des parties faisant saillie d'entraînement (41) et/ou qu'une section (65) de l'entraîneur (33) peut être poussée hors du logement de montage (34) par une contrainte exercée par le logement d'attelage de traction (18) sur une autre section (64) de l'entraîneur (33).

14. Attelage de remorque selon l'une quelconque des revendications précédentes, **caractérisé en ce que** l'entraîneur (33) contient de manière radiale au moins 2 composantes ou couches et/ou que l'entraîneur (33) comprend un support disposé à l'intérieur radialement par rapport au corps d'attelage et une partie d'entraîneur, en particulier annulaire, disposée sur le support à l'extérieur radialement par rapport au corps d'attelage, dans lequel la partie d'entraîneur est prévue pour l'entraînement en rotation par le logement d'attelage de traction.

15. Attelage de remorque selon l'une quelconque des revendications précédentes, **caractérisé en ce que** l'entraîneur (33) comprend au moins un entraîneur (33) configuré en tant que roue ou roulette (334), qui est monté de manière à pouvoir tourner sur le corps d'attelage, dans lequel une partie de la périphérie extérieure de l'entraîneur (33) fait saillie devant une surface du corps d'attelage vers l'extérieur pour l'entraînement en rotation par l'attelage de traction, tandis qu'une autre partie de la périphérie extérieure de l'entraîneur (33) est logée dans un évidement (337) du corps d'attelage, et/ou que l'entraîneur (33) comprend un entraîneur (340) monté de manière à pouvoir coulisser linéairement sur le corps d'attelage.
